# EUROPEAN PATENT APPLICATION

(11) **EP 4 717 746 A1**
(43) Date of publication of application: **01.04.2026**
(21) Application number: 24203081.5
(22) Date of filing: 27.09.2024
(51) Int. Cl.: C09J 163/00

(54) **ONE COMPONENT (1K) COMPOSITION BASED ON EPOXIDE COMPOUNDS**

(71) Applicant: Henkel AG & Co. KGaA, 40589 Düsseldorf (DE)
(72) Inventor: Migliore, Nicola, 40227 Düsseldorf (DE); Kohlstrung, Rainer, 68723 Plankstadt (DE); Klotz, Michael, 40597 Düsseldorf (DE)

(57) **Abstract**

An one component (1K) composition comprising: a) thermally-expandable thermoplastic microspheres; b) at least one epoxide compound; c) at least one compound which provides at least two amine hydrogens reactive toward epoxide groups; and, d) at least one accelerator, wherein the composition is characterized by a molar ratio of epoxide-reactive groups to epoxide groups from 0.6:1 to 1.2:1, preferably from 0.95: 1 to 1.1:1. The present disclosure envisages the use of this one component (1K) composition in providing an adhesive within a bonded structure upon curing of said composition under conditions in which the constituent microspheres retain their capacity to thermally expand.

## Description

### FIELD OF THE INVENTION

The present disclosure is directed to an one component (1K) composition comprising thermally expandable thermoplastic microspheres, at least one epoxide compound, a curative for said epoxide compound and an accelerator for the reaction of said epoxide compound and said curative. The present disclosure also provides for a bonded structure of which an adhesive - typically disposed in a layer between first and second substrates - is obtained from the curing of said one component (1K) composition. The bonded structure may be debonded through the thermal expansion of the constituent microspheres of the cured composition.

### BACKGROUND TO THE INVENTION

Adhesive bonds and polymeric coatings are commonly used in the assembly and finishing of manufactured goods. They are used in place of mechanical fasteners, such as screws, bolts and rivets, to provide bonds with reduced machining costs and greater adaptability in the manufacturing process. Adhesive bonds distribute stresses evenly, reduce the possibility of fatigue and seal the joints from corrosive species.

Whilst adhesive bonds thus offer many advantages over mechanical fasteners, it tends to be difficult to disassemble adhesively bonded objects where this is required in practical applications, such as the recycling or reuse of components of articles of manufacture. The removal of the adhesive through mechanical processes - such as by sand blasting or by wire brushing - is often precluded because the adhesive is disposed between substrates and is thus either inaccessible or difficult to abrade without corrupting the substrate surfaces. Disassembly through the application of chemicals and / or high temperature - such as disclosed in US Patent No. 4,171,240 (Wong) and US Patent No. 4,729,797 (Linde et al.) - might be effective but can be time consuming and complex to perform: moreover, the aggressive chemicals and / or harsh conditions required can damage the substrates being separated, rendering them unsuitable for subsequent applications.

Noting these problems, certain authors have sought to develop debondable adhesive compositions, wherein the passage of an electrical current through the cured compositions acts to disrupt the bonding at the interface of the adhesive and the substrate. Illustrative references in this regard include: US Patent No. 7,465,492 (Gilbert); US 2007/0269659 (Gilbert); US2020/195025A (Yoder et al.); EP 3 835 383 A1 (Henkel AG & Co. KGaA); EP 3 835 378 A1 (Henkel AG & Co. KGaA); EP 3 835 386 A1 (Henkel AG & Co. KGaA); WO 2016/135341 (Henkel AG & Co. KGaA; and, WO 2022/207300 A1 (Henkel AG & Co. KGaA).

In each of the aforementioned references, the cured adhesives thereof possess *"electrolyte functionality"* in that the adhesive materials permit the conduction of ions, either anions, cations or both: the electrolyte functionality is understood to derive from the ability of the adhesive materials to solvate ions of at least one polarity. Electrolytes provided within the adhesive materials impart sufficient ionic conductivity to said materials to support a faradaic reaction at a bond formed between the material and an electrically conductive surface. The term *"faradaic reaction"* means an electrochemical reaction in which a material is oxidized or reduced and this reaction permits the adhesive material to disbond from the surface.

The present inventors have sought an alternative means of effectively disrupting the bonding of an adhesive material to a substrate, which method neither utilizes the passage of an electrical current through the adhesive material nor requires the use of electrolytic compounds. Moreover, the present inventors have sought to develop debondable adhesive materials which may have utility: in the bonding of electronic components to themselves or to supporting frames or encasements for said components; and, in electro-mobility (*e-mobility*) applications, such as within electric powertrain technologies, in-vehicle information technologies, communication technologies and connected infrastructures which enable the electric propulsion of vehicles. It is evidently desirable to provide a means for effectively recycling or re-using previously bonded materials found in electronic and electro-mobility hardware.

### STATEMENT OF THE INVENTION

In accordance with a first aspect of the present disclosure, there is provided an one component (1K) composition comprising: a) thermally-expandable thermoplastic microspheres; b) at least one epoxide compound; c) at least one compound which provides at least two amine hydrogens reactive toward epoxide groups; and, d) at least one accelerator, wherein the composition is characterized by a molar ratio of epoxide-reactive groups to epoxide groups of from 0.6:1 to 1.2:1, preferably from 0.95: 1 to 1.1:1. The present disclosure envisages the use of this one component (1K) composition in providing an adhesive within a bonded structure upon curing of said composition under conditions in which the constituent microspheres retain their capacity to thermally expand.

The one component (1K) composition may typically comprise, based on the weight of the composition:
from 10 to 40 wt.% of a) said thermally-expandable thermoplastic microspheres;
from 30 to 70 wt.% of b) said at least one epoxide compound;
from 0.01 to 25 wt.% of c) said at least one compound which provides at least two amine hydrogens reactive toward epoxide groups;
from 0.01 to 5 wt.% of d) said at least one accelerator; and,
from 0 to 40 wt.% of e) additive and adjunct materials,
wherein the composition is characterized by a molar ratio of epoxide-reactive groups to epoxide groups of from 0.6:1 to 1.2: 1, preferably from 0.95: 1 to 1.1: 1.

For instance, the one component (1K) composition may comprise, based on the weight of the composition:
from 15 to 40 wt.%, preferably from 20 to 40 wt.% of a) said thermally-expandable thermoplastic microspheres;
from 40 to 70 wt.%, preferably from 50 to 70 wt.% of b) said at least one epoxide compound;
from 0.1 to 15 wt.%, preferably from 0.1 to 5 wt.% of c) said at least one compound which provides at least two amine hydrogens reactive toward epoxide groups;
from 0.01 to 2 wt.%, preferably from 0.01 to 1 wt.% of d) said at least one accelerator; and,
from 0 to 30 wt.%, preferably from 0 to 20 wt.% of e) said additive and adjunct materials, wherein the composition is characterized by a molar ratio of epoxide-reactive groups to epoxide groups from 0.6:1 to 1.2: 1, preferably from 0.95: 1 to 1.1: 1.

It is preferred that the thermally expandable thermoplastic microspheres possess a core-shell structure, wherein the shell is formed from cross-linked polymer and the core is composed of a blowing agent. Independently of or additional to this compositional preference, it is preferred that the thermally expandable thermoplastic microspheres expand when exposed to a temperature of at least 90°C, for example from 100 to 200°C, from 100 to 170°C or from 100 to 140°C. To facilitate their inclusion in the composition, it is desirable that the thermally expandable thermoplastic microspheres possess a mean volume particle size (Dv50), as measured by laser diffraction, of from 5 to 100 µm, preferably from 5 to 75 µm, more preferably from 5 to 50 µm and most preferably from 10 to 30 µm.

In an important embodiment, constituent b) of the one component (1K) composition comprises: b)i) at least one liquid polyglycidyl ether of a polyhydric phenol, said polyglycidyl ether being characterized by a viscosity of from 100 to 5000 mPa.s, as determined at 25°C and 50% Relative Humidity; and, b)ii) at least one liquid epoxide compound which acts as a diluent for said constituent b)i) and which has from 1 to 6 epoxide groups per molecule.

The composition of the present disclosure demonstrates effective adhesion to metallic substrates including but not limited to electrocoated metallic substrates. Moreover, the composition can be used in combination with known fixatives to provide effective adhesion within bonded structures comprising one or more substrates.

In accordance with a second aspect of the present disclosure, there is provided a bonded structure comprising:
a first substrate (S¹);
a second substrate (S²); and,
a fixative layer which is interposed between said first and second substrates and which is disposed on said second substrate (S²);
wherein, interposed between said first substrate (S¹) and said fixative layer, there is further provided:
a thermally debondable adhesive layer, said thermally debondable adhesive layer being obtained by the curing of an one-component (1K) composition as defined hereinabove and in the appended claims.

As noted above, the curing of the one-component (1K) composition should occur under conditions in which constituent microspheres retain their capacity to thermally expand. Thus the bonded structure *per se* - during its operable lifetime and when maintained at temperature below the activation temperature of the microspheres - contains said thermally expandable thermoplastic microspheres disposed within a cured polymer matrix.

The bonded structure is preferably characterized in that: i) said fixative layer has a thickness of from 250 to 2500 µm, preferably from 500 to 2000 µm and more preferably from 1000 to 2000 µm; and, ii) said thermally debondable adhesive layer has a thickness of from 50 to 300 µm, preferably from 100 to 300 µm and more preferably from 150 to 250 µm.

In accordance with a still further aspect of the present disclosure, there is provided a method of debonding the bonded structure as defined herein above and in the appended claims, said method comprising the steps of: i) heating the thermally debondable adhesive layer to cause the expansion of at least a fraction of the thermally-expandable thermoplastic microspheres; and, ii) causing cohesive failure of said adhesive layer. In an embodiment of step i), the thermally debondable adhesive layer may be heated to a temperature of from 90 to 200°C, for example from 100 to 170°C or from 100 to 140°C. Independently of, or additional to this temperature preference, the heating of step i) may be conducted for a duration of from 0.1 to 60 minutes, for example from 0.5 to 30 minutes.

The thermal expansion of the microspheres under heating promotes the cohesive failure of the adhesive layer comprising said microspheres. A concomitant effect of this thermal expansion is that the expanded or *"foamed"* adhesive layer provides a thermal insulation effect which can serve to protect the first and / or second substrate(s) of the bonded structure from the elevated temperatures to which the adhesive layer is exposed.

Where the aspects of the disclosure are described herein as having certain embodiments, any one or more of those embodiments can be implemented in or combined with any one of the further embodiments, even if that combination is not explicitly described. Expressed differently, the described embodiments are not mutually exclusive, and permutations thereof remain within the scope of this disclosure.

### DEFINITIONS

The terms *"comprising", "comprises"* and *"comprised* of" as used herein are synonymous with *"including", "includes", "containing"* or *"contains",* and are inclusive or open-ended and do not necessarily exclude additional, non-recited members, elements or method steps.

As used herein, the term *"consisting of"* excludes any element, ingredient, member or method step not specified. For completeness, the term *"comprising"* encompasses *"consisting of".*

When amounts, concentrations, dimensions and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

Further, in accordance with standard understanding, a weight range represented as being *"from 0 to* x" specifically includes 0 wt.%: the ingredient defined by said range may be absent from the composition or may be present in the composition in an amount up to x wt.%.

The words *"preferred", "preferably", "desirably"* and *"particularly"* are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

The word *"exemplary"* is used herein to mean serving as an example, instance, or illustration. Any aspect or design described herein as *"exemplary"* is not necessarily to be construed as preferred or advantageous over other aspects or designs. Rather, use of the word exemplary is intended to present concepts in a concrete fashion.

As used throughout this application, the word *"may"* is used in a permissive sense - that is meaning to have the potential to - rather than in the mandatory sense.

Spatially relative terms, such as *"upper", "lower", "top", "back", "above", "below", "left", "right", "on"* or *"upon"* and the like are used herein to describe an element's relationship to another element(s) as illustrated in the figures. Obviously all such spatially relative terms refer to the orientation shown in the figures only for ease of description and are not necessarily limiting given that an apparatus can assume orientations different from those illustrated in the figures when in use.

As used herein, room temperature is 23°C plus or minus 2°C. As used herein, *"ambient conditions"* means the temperature and pressure of the surroundings in which either the composition or a cured product obtained therefrom is located.

The molecular weights referred to in this specification can be measured with gel permeation chromatography (GPC) using polystyrene calibration standards, such as is done according to ASTM 3536.

Viscosities of the compositions described herein are, unless otherwise stipulated, measured using the Anton Paar Viscometer, Model MCR 301 at standard conditions of 25°C and 50% Relative Humidity (RH). The viscometer is calibrated one time a year and checked by services. The calibration is done using standard liquids of known viscosity from 1 to 50,000 cps (Parallel Plate PP20 and at a shear rate of 1s⁻¹ at 23°C). Measurements of the compositions according to the present disclosure are done using the parallel plate PP20 at different shear rates from 1.5 to 100 s⁻¹.

Unless otherwise stated, the term *"particle size"* refers to the largest axis of the particle. In the case of a generally spherical particle, the largest axis is the diameter.

The term *"mean volume particle size" (Dv50),* as used herein, refers to a particle size corresponding to 50% of the volume of the sampled particles being greater than and 50% of the volume of the sampled particles being smaller than the recited Dv50 value. Particle size is determined herein by laser diffraction using Anton Paar Particle Size Analyzer (PSA) 1190.

As used herein, *"aspect ratio"* is defined as the ratio of the particle diameter located perpendicular to the maximum diameter (i.e., the Aspect Diameter) to the maximum diameter. The aspect ratio can be evaluated by image analyses of oriented particles. If the aspect ratio is being determined on a collection of particles, the aspect ratio may be measured on a few representative particles and the results averaged: representative particles should be sampled by ASTM D5680-95a (Reapproved 2001).

As used herein, the term *"thermally conductive"* refers to a material having a thermal conductivity of at least 10 W/m·K as determined according to ASTM E1530 at 23°C and at a relative humidity of 50%. Materials which are thermally conductive are not precluded from being electrically conductive. Thus thermally conductive filler mentioned herein may be both thermally conductive and electrically conductive or, alternatively, may be thermally conductive and electrically insulating.

The definition *"electrically conductive"* characterizes components having a volume electrical conductivity at room temperature of at least 1 × 10⁵ Sm⁻¹. The term *"electrically non-conductive"* as used herein references a material having a volume electrical conductivity of less than 1 Sm⁻¹, typically less than 1 × 10⁻⁵ Sm⁻¹ or less than 1 × 10⁻⁸ Sm⁻¹. The terms *"volume electrical conductivity"* is herein used in accordance with its standard meaning given in ASTM D1711-22 *Standard Terminology Relating to Electrical Insulation.* Electrical conductivity may be measured in accordance with ASTM 257-14 (2021) *Standard Test Methods for DC Resistance or Conductance of Insulating Materials.*

As used herein, the term *"metallic"* may be used to denote pure metal, metal alloys or metal composites. As used herein, the term *"alloy"* refers to a substance composed of two or more metals or of a metal and a non-metal which have been intimately united, usually by being fused together and dissolved in each other when molten. As exemplary metals and metallic alloys, mention may be made of: aluminum; aluminum alloys; bronze; beryllium; beryllium alloys; chromium; chromium alloys; cobalt; cobalt alloys; copper; copper alloys; gold; iron; iron alloys; steels; magnesium; magnesium alloys; nickel; nickel alloys; lead; lead alloys; tin; tin alloys, such as tin-bismuth and tinlead; zinc; zinc alloys; and, superalloys, such as International Nickel 100 (IN-100) or International Nickel 718 (IN-718). Representative steels include: crucible steel; carbon steel; spring steel; alloy steel; maraging steel; and, stainless steel, inclusive of austenitic stainless steel, ferritic stainless steel, duplex stainless steel, and Martensitic stainless steel.

The term *"electronic component"* denotes any component, member or apparatus which fulfils any electric, magnetic and/or electronic functionality. This means that electric, magnetic and/or electromagnetic signals may be applied to and/or generated by the electronic component during regular use. Exemplary electronic components include but are not limited to: batteries; battery cells; (micro)processors; signal processors; displays; capacitors; resistors; transistors; converters; inverters; medical application devices, such as a glucose delivery device or an automatic defibrillator; global positioning system (GPS) receivers; sensors, such as biometric sensors, temperature sensors, moisture sensors, velocity sensors and accelerometers; and, antennas.

The term *"frame"* as used herein encompasses any rigid structure that provides structural support to an object, in particular an electronic component. Whilst a frame may be configured in a variety of different shapes and configurations, the term encompasses rigid structures which may at least partially surround or enclose said objects.

As used herein, the term *"debondable"* means that, after curing of the adhesive composition, the bond strength can be weakened by at least 50% upon application of temperature of from 60 to 200°C for a duration of from 15 to 3600 seconds. Bond strength is measured by Tensile Lap Shear (TLS) test performed at room temperature and based upon EN 1465:2009 (German version) *Adhesives - Determination of tensile lap-shear strength of bonded assemblies.*

As used herein, the term *"one component (1K) composition"* refers to a composition where, during storage of the composition, the components thereof are all admixed together but the properties of the composition, including viscosity, remain sufficiently consistent over the duration of storage to permit successful utility of the composition thereafter.

*"Two-component (2K) compositions"* in the context of the present disclosure are understood to be compositions in which a first component and a second component are stored in separate vessels because of their (high) reactivity. The two components are mixed only before or during application and then react, typically without additional activation, with bond formation and thereby formation of a polymeric network. Herein higher temperatures may be applied in order to accelerate the crosslinking reaction.

As used herein, the term *"monomer"* refers to a substance that can undergo a polymerization reaction to contribute constitutional units to the chemical structure of a polymer. The term *"monofunctional",* as used herein, refers to the possession of one polymerizable moiety. The term *"polyfunctional",* as used herein, refers to the possession of more than one polymerizable moiety.

The term *"accelerator"* is intended herein to encompass any material which is a cure accelerator for the reactive functional compounds of the compositions disclosed herein. The accelerator may be of either the catalytic or reactive type.

The term *"active hydrogen atom"* refers to an hydrogen atom which displays activity according to the Zerewitinoff test as described by Kohlerin J. Am. Chem. Soc., 49, 3181 (1927), which is expressly incorporated herein by reference in its entirety in various non-limiting embodiments. Active hydrogen atoms can be derived from hydroxyl, thiol, primary amine, secondary amine and carboxyl groups.

As used herein, the term *"equivalent (eq.)"* relates, as is usual in chemical notation, to the relative number of reactive groups present in a reaction. The term *"equivalent weight'* as used herein refers to the molecular weight divided by the number of a function concerned. As such, *"epoxy equivalent weight"* (EEW) means the weight of resin, in grams, that contains one equivalent of epoxy.

As used herein, the term *"epoxide compound"* denotes a compound characterized by the presence of at least one cyclic ether group, namely one wherein an ether oxygen atom is attached to two adjacent carbon atoms thereby forming a cyclic structure. The term is intended to encompass monoepoxide compounds, diepoxide compounds, higher polyepoxide compounds having more than two epoxide groups and epoxide terminated prepolymers. The term *"monoepoxide compound"* is meant to denote epoxide compounds having one epoxide group. The term *"polyepoxide compound"* is meant to denote epoxide compounds having at least two epoxide groups. The term *"diepoxide compound"* is meant to denote epoxide compounds having two epoxide groups.

By the term *"polyglycidyl polyether of a polyhydric phenol"* is meant a polyepoxide compound having: terminal epoxide groups; at least one aromatic nucleus, which nucleus may be a fused aromatic nucleus; and, at least two aliphatic groups including terminal epoxy containing aliphatic groups, the aliphatic groups being united to said aromatic nucleus or nuclei through carbon to oxygen to carbon linkages. Such compounds may be produced by the reaction of epichlorohydrin with a polyhydric phenol.

As used herein, *"C₁-Cₙ alkyl"* refers to a monovalent group that contains from 1 to n carbons atoms, that is a radical of an alkane and includes straight-chain and branched organic groups. As such, a *"C₁-C₄ alkyl"* refers to a monovalent group that contains from 1 to 4 carbons atoms, that is a radical of an alkane and includes straight-chain and branched organic groups. Examples of alkyl groups include, but are not limited to: methyl; ethyl; propyl; isopropyl; n-butyl; isobutyl; sec-butyl; and, tert-butyl. In the present invention, such alkyl groups may be unsubstituted or may be substituted with one or more halogen. Where applicable for a given moiety (R), a tolerance for one or more non-halogen substituents within an alkyl group will be noted in the specification.

The terms *"alkylene group"* refers to a divalent radical derived from an alkyl group, as defined above.

The term *"C₁-Cₙhydroxyalkyl"* as used herein refers to an HO-(alkyl) group having from 1 to n carbon atoms, where the point of attachment of the substituent is through the oxygen-atom and the alkyl group is as defined above. The term *"C₁-Cₙ aminoalkyl"* as used herein refers to an R¹R²N-(alkyl) group having from 1 to n carbon atoms, where the point of attachment of the substituent is through the nitrogen-atom and the alkyl group is as defined above.

The term *"C₃-C₁₈ cycloalkyl"* as used herein means a saturated cyclic hydrocarbon having from 3 to 18 carbon atoms. In the present invention, such cycloalkyl groups may be unsubstituted or may be substituted with one or more halogen. Where applicable for a given moiety (R), a tolerance for one or more non-halogen substituents within a cycloalkyl group will be noted in the specification. Exemplary cycloalkyl groups include cyclopropyl, cyclobutyl, cyclopentyl or cyclohexyl groups.

As used herein, *"C₂-C₂₀ alkenyl"* group refers to a monovalent aliphatic carbon group that contains 2 to 20 carbon atoms and at least one double bond disposed in any position. The alkenyl group can be straight chained, branched or cyclic and may optionally be substituted with one or more halogen. Where applicable for a given moiety (R), a tolerance for one or more non-halogen substituents within an alkenyl group will be noted in the specification. The term *"alkenyl"* also encompasses radicals having *"cis"* and *"trans"* configurations, or alternatively, "E" and "Z" configurations, as appreciated by those of ordinary skill in the art. Examples of said C₂-C₂₀ alkenyl groups include, but are not limited to: -CH=CH₂; -CH=CHCH₃; -CH₂CH=CH₂; -C(=CH₂)(CH₃); -CH=CHCH₂CH₃; - CH₂CH=CHCH₃; -CH₂CH₂CH=CH₂; -CH=C(CH₃)₂; -CH₂C(=CH₂)(CH₃); -C(=CH₂)CH₂CH₃; - C(CH₃)=CHCH₃; -C(CH₃)CH=CH₂; -CH=CHCH₂CH₂CH₃; -CH₂CH=CHCH₂CH₃; - CH₂CH₂CH=CHCH₃; -CH₂CH₂CH₂CH=CH₂; -C(=CH₂)CH₂CH₂CH₃; -C(CH₃)=CHCH₂CH₃; - CH(CH₃)CH=CHCH, -CH(CH₃)CH₂CH=CH₂; -CH₂CH=C(CH₃)₂; 1-cyclopent-1-enyl; 1-cyclopent-2-enyl; 1-cyclopent-3-enyl; 1-cyclohex-1-enyl; 1-cyclohex-2-enyl; and, 1-cyclohexyl-3-enyl.

As used herein, *"C₆-C₁₈ aryl"* group used alone or as part of a larger moiety - as in *"aralkyl group" -* refers to monocyclic, bicyclic and tricyclic ring systems in which the monocyclic ring system is aromatic or at least one of the rings in a bicyclic or tricyclic ring system is aromatic. The bicyclic and tricyclic ring systems include benzofused 2-3 membered carbocyclic rings. In the present disclosure, such aryl groups may be unsubstituted or may be substituted with one or more halogen. Where applicable for a given moiety (R), a tolerance for one or more non-halogen substituents within an aryl group will be noted in the specification. Exemplary aryl groups include: phenyl; (C₁-C₄)alkylphenyl, such as tolyl and ethylphenyl; indenyl; naphthalenyl, tetrahydronaphthyl, tetrahydroindenyl; tetrahydroanthracenyl; and, anthracenyl.

The term *"arylene"* as used herein refers to a divalent radical counterpart of an aryl group. Further, as used herein, *"alkylaryl"* refers to alkyl-substituted aryl groups as set forth above. Moreover, as used herein *"aralkyl"* means an alkyl group substituted with an aryl radical as defined above.

The term *"hetero"* as used herein refers to groups or moieties containing one or more heteroatoms, such as N, O, Si and S. Thus, for example *"heterocyclic"* refers to cyclic groups having, for example, N, O, Si or S as part of the ring structure. *"Heteroalkyl", "heterocycloalkyl"* and *"heteroaryl"* moieties are alkyl, cycloalkyl and aryl groups as defined hereinabove, respectively, containing N, O, Si or S as part of their structure.

The term *"substituted"* refers to substitution with at least one suitable substituent. For completeness: the substituents may connect to the specified group or moiety at one or more positions; and, multiple degrees of substitution are allowed unless otherwise stated. Further, the terms *"substitution"* or *"substituted with"* include the implicit proviso that such substitution is in accordance with permitted valence of the substituted atom and the substituent, and that the substitution results in a stable compound that does not spontaneously undergo transformation by, for instance, rearrangement, cyclization or elimination.

### BRIEF DESCRIPTION OF THE DRAWINGS

Various other objects, advantages, and features of the disclosure will become apparent to those skilled in the art from the following discussion taken in conjunction with the appended drawings in which:
Figure 1 depicts a bonded structure in accordance with a first embodiment of the present disclosure and the method of debonding thereof; and,
Figure 2 depicts a bonded structure in accordance with a second embodiment of the present disclosure.

### DETAILED DESCRIPTION OF THE INVENTION

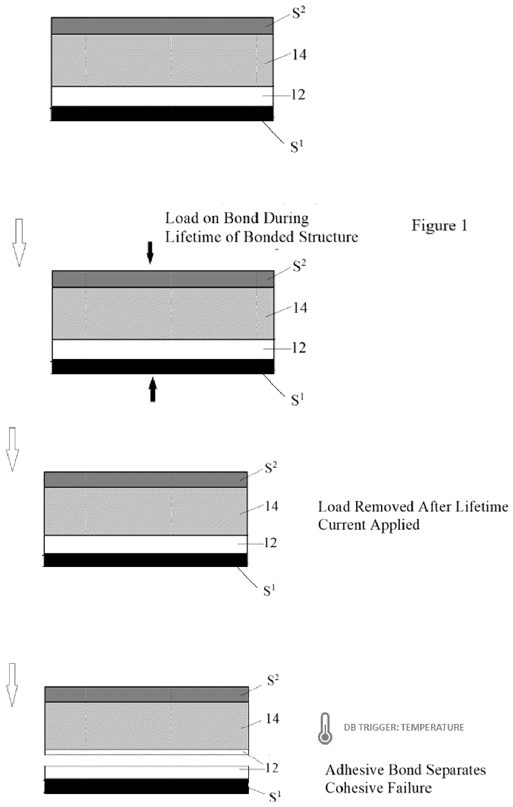

The bonded structure of Figure 1 comprises first (S¹) and second (S²) substrates. Interposed between the first (S¹) and second (S²) substrates are: a thermally debondable adhesive layer (12) which comprises a cured polymer matrix and thermally expandable thermoplastic microspheres; and, a fixative layer (14).

The first substrate (S¹) and the second substrate (S²) may be composed of either an electrically conductive or electrically non-conductive material.

Exemplary conductive materials having utility in or as the substrates (S¹, S²) include, but are not limited to: metallic films; conducting oxide films; or, conductive composite materials. As exemplary conducting oxides there may be mentioned: doped indium oxides, such as indium tin oxide (ITO); doped zinc oxide; antimony tin oxide; cadmium stannate; and, zinc stannate.

Exemplary non-conductive materials having utility in or as the substrates (S¹, S²) include polymeric substrates of which mention may be made of: polyolefins such as polyethylene and polypropylene; polyesters, such as polybutylene terephthalate (PBT) and polyethylene terephthalate (PET); polyamides; polyacrylonitrile; polyvinyl chloride; polyacrylates, such as polymethyl methacrylate; conjugated diene homopolymers, such as polychloroprene, polybutadiene and polyisoprene; copolymers of conjugated dienes; copolymers of conjugated dienes with aromatic vinyl compounds, such as copolymers of butadiene or isoprene with styrene; silicones; and, polyurethanes. It is also possible that an electrically non-conductive substrate may be constituted by a polymer-wrapped metallic material. Further, the use of mineral and lignocellulosic materials in or as an electrically non-conductive substrate is not precluded.

As further shown in Figure 1 appended hereto, the layer of fixative (14) disposed upon the second substrate (S²) and interposed between said substrate (S²) and the thermally debondable adhesive layer (12). The layer of fixative (14) may, for example, have a thickness of from from 250 to 2500 µm, for instance from 500 to 2000 µm or from 1000 to 2000 µm.

Whilst the fixative layer (14) and the thermally debondable adhesive layer (12) are depicted in Figure 1 as being disposed on and in direct contact with, respectively the second substrate (S²) and the first substrate (S¹), it will however be appreciated that one or more intermediate layers may be disposed between the said substrates (S¹, S²) and said layers (12, 14). An electrocoat (*e-coat*) layer is a first representative example of such an intermediate layer. For metallic substrates (S¹, S²), a conversion coating layer is a further representative example of such an intermediate layer. Herein the term *"conversion"* refers to a treatment of the surface of a substrate which causes the surface material to be chemically converted to a different material. Typically, a metal or alloyed surface substrate is chemically treated to provide a tightly adherent conversion coating, all or part of which consists of a stabilized form - for instance an oxidized form - of the substrate metal. Such chemical conversion coatings can demonstrate high corrosion resistance as well as providing a strong bonding affinity for the subsequent thermally debondable adhesive layer (12) or the fixative layer (14).

The fixative layer (14) should not be thermally or electrochemically debondable: save for these conditions, the fixative layer (14) is not particularly limited in composition but it should be operable or effective in the bonding of the second substrate (S²). Exemplary matrices for the fixative layer (14) may be chosen from: epoxy adhesives; acrylic adhesives; polyurethane adhesives; cyanoacrylate adhesives; silicone adhesive; polyimide adhesives; silane modified polymers; butyls; hotmelt adhesives; and, mixtures thereof. Illustrative commercial products having utility in forming the fixative layer (14) include: Teroson EP5065, a two-component (2K) epoxy fixative, available from Loctite; Teroson MS 939, a modified silane fixative, available from Loctite; and, Teroson PU 6700, a two-component (2K) polyurethane fixative, available from Loctite.

For completeness, it is noted that the composition from which the thermally debondable adhesive layer (12) is derived and the composition from which the fixative layer (14) is derived may be independently cured in the formation of the bonded structure. Alternatively, the respective compositions may be simultaneously cured where the operable curing conditions for each composition are compatible.

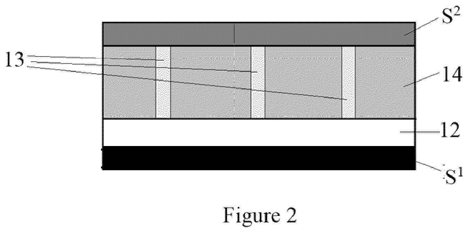

In the embodiment of Figure 2, spacers (13) are interposed within the fixative layer (14) and contact the thermally debondable adhesive layer (12): these layers (12, 14) otherwise remain in direct contact with one another where said spacers (13) are absent. Any spacer (13) should conventionally be detachable from the adherends without damaging said elements of the bonded structure. For surety, such spacers are optional and may be absent in certain variants of the bonded structure. However, spacers can serve to firmly fix the spatial relationship between the fixative layer (14) and the thermally debondable adhesive layer (12) and, in doing so, moderate the effects of vibrations and impacts to which a bonded structure might be subjected either *per se* or when included as a component of a larger article of manufacture. This is particularly germane for structures which are to be disposed within portable electronic devices or within vehicles where vibration and jolting can displace adherends.

Where more than one spacer (13) is present, the two spacers may be identical but it is not precluded that individual spacers may possess different geometries and / or be comprised of different materials. Moreover, a given spacer need not be unitary but may comprise a plurality of elements provided this does not compromise the mechanical strength of the spacer or diminish the support role thereof. Still further, the number of spacers and the disposal of the spacers within the fixative layer (14) may be moderated to optimize that support function. The spacers may be disposed at the extremities of the fixative layer (14); alternatively or additionally said spacers may interrupt the fixative layer (14).

The spacers should preferably be formed from electrically insulating materials which are flame retardant, which possess a suitable hardness and which are suited to meet impact strain requirements, for example by providing shock absorption or flexure for a support system. A Shore A hardness of from 20 to 95, for instance from 30 to 90 might be mentioned in this context. Glass spacers have been utilized in certain circumstances. Also, exemplary polymeric materials having utility as spacers include but are not limited to: polyvinyl chloride; polyalkylenes, such as polyethylene and polypropylene; polyacrylates such as polymethyl methacrylate; conjugated diene homopolymers, such as polychloroprene, polybutadiene and polyisoprene; copolymers of conjugated dienes; copolymers of conjugated dienes with aromatic vinyl compounds, such as copolymers of butadiene or isoprene with styrene; silicones; and, polyurethanes. A preference for injection moldable polymeric materials may be noted.

An illustrative method of debonding the bonded structure is further depicted in Figure 1 but for surety it is noted that this method is applicable to each of the structural configurations of Figures 1 and 2. The bonded structure is typically subjected to a load during its working lifetime; that load may be removed from the bonded structure after that lifetime or usage. The thermally debondable adhesive layer (12) of the bonded structure is heated, the temperature of said adhesive layer (12) being monitored by a suitable method, of which thermal imaging may be mentioned as an example. When the temperature of the thermally debondable adhesive layer (12) reaches the activation temperature of the microspheres disposed therein, these microspheres expand in volume. As a consequence of this expansion cohesive failure may occur within the layer (12) enabling the structure to be separated.

Typically, the thermally debondable adhesive layer (12) may be heated to a temperature of from 90 to 200°C, for example from 100 to 170°C or from 100 to 140°C. Subject to achieving cohesive failure, there is no particular intention to limit the duration of the heating applied to the adhesive layer (12). Where the cohesive failure of the layer (12) is to be facilitated by the application of a force - exerted via a weight or a spring, for instance - the heating to a temperature above the activation temperature of the expandable microspheres might only need to be applied for the order of seconds. However, it will be more typical for a temperature above the activation temperature of the expandable microspheres to be applied for a duration of from 0.1 to 60 minutes, for example from 0.5 to 30 minutes.

As discussed above, the illustrated bonded structure may have utility in the bonding of electronic components either to one another or to a frame, which frame may optionally be disposed within an assembly comprising a plurality of electronic components in order to position or constrain one or more of said electronic components. Such an assembly may, for example, be provided with an encasement (*casque*) or other supporting arrangement in order to mitigate impacts or compressive, tensile, torsional, shear or bending stresses imposed thereon. The assembly may contain electrical interconnects which enable a voltage to be applied across electrically conductive surfaces provided on the frame and electronic component(s) thereof. The requisite power source to provide this potential difference may be disposed within the encasement or external to the encasement.

Having regard to automotive applications and, more particularly e-mobility components, the first (S¹) or second (S²) substrate may be provided by, for example: a battery lid; a battery cell, to effect for instance cell-to-cell, cell-to-module or cell-to-body bonding; battery modules; an inverter; or, a converter.

By way of further example, it is envisaged that the bonded structure may serve to debondably fix one or more electronic components to a frame disposed within a phone encasement. The debondable fixing of a battery within such a phone encasement may be specifically mentioned.

### Thermally-Debondable Adhesive Layer (12)

Herein, the thermally debondable adhesive layer (12) is obtained by the curing of a curable, one component (1K) composition, examples of which will be described herein below. The curable, one component (1K) composition comprises: a) thermally-expandable thermoplastic microspheres; b) at least one epoxide compound; c) at least one compound which provides at least two amine hydrogens reactive toward epoxide groups; d) at least one accelerator; and, optionally e) additive and adjunct materials.

To form a curable composition, the below-described parts are brought together and mixed. As is known in the art, to form one component (1K) curable compositions, the elements of the composition are brought together and homogeneously mixed under conditions which inhibit or prevent the reactive constituents from reacting: as would be readily comprehended by the skilled artisan, this might include mixing conditions which limit or prevent exposure to irradiation or which limit or prevent the activation of a constituent latent catalyst. As such, it will often be preferred that the curative constituents are mixed in pre-determined amounts under anhydrous conditions without intentional heating or photo-irradiation.

The reactive compounds of the composition should be mixed under sufficient shear forces to yield a homogeneous mixture. It is considered that this can be achieved without special conditions or special equipment. That said, suitable mixing devices might include: static mixing devices; magnetic stir bar apparatuses; wire whisk devices; augers; batch mixers; planetary mixers; C.W. Brabender or Banburry^{®} style mixers; and, high shear mixers, such as blade-style blenders and rotary impellers.

In accordance with the broadest process aspects of the present disclosure, the below described curable compositions are applied to the surface of the first substrate (S¹) and then cured *in situ* to provide the depicted adhesive layer (12). Prior to applying the curable compositions to a substrate (S¹), it is often advisable to pre-treat the relevant surfaces to remove foreign matter there from: this step can, if applicable, facilitate the subsequent adhesion of the compositions thereto. Such treatments are known in the art and can be performed in a single or multi-stage manner constituted by, for instance, the use of one or more of: an etching treatment with an acid suitable for the substrate and optionally an oxidizing agent; sonication; plasma treatment, including chemical plasma treatment, corona treatment, atmospheric plasma treatment and flame plasma treatment; immersion in a waterborne alkaline degreasing bath; treatment with a waterborne cleaning emulsion; treatment with a cleaning solvent, such as carbon tetrachloride or trichloroethylene; and, water rinsing, preferably with deionized or demineralized water. In those instances where a waterborne alkaline degreasing bath is used, any of the degreasing agent remaining on the surface should desirably be removed by rinsing the substrate surface with deionized or demineralized water.

In some embodiments, the adhesion of the applied compositions to the preferably pre-treated substrate (S¹) surface may be facilitated by the application of a primer thereto. Indeed primer compositions may be necessary to ensure efficacious fixture and / or cure times of the compositions on inactive substrates. Whilst the skilled artisan will be able to select an appropriate primer, instructive references for the choice of primer include but are not limited to: US Patent No. 3,855,040; US Patent No. 4,731,146; US Patent No. 4,990,281; US Patent No. 5,811,473; GB 2502554; and, US Patent No. 6,852,193.

The curable compositions are then applied to the preferably pre-treated, optionally primed surfaces by application methods conventional for liquid state materials, such as: brushing; roll coating; bar coating; doctor-blade application; printing methods; and, spraying methods, including but not limited to air-atomized spray, air-assisted spray, airless spray and high-volume low-pressure spray.

It is recommended that the curable compositions be applied to a surface at a wet film thickness of from 10 to 500 µm. The application of thinner layers within this range is more economical and provides for a reduced likelihood of deleterious thick cured regions. However, great control must be exercised in applying thinner coatings or layers so as to avoid the formation of discontinuous cured films.

The curing of the applied compositions of the disclosure typically occurs at temperatures in the range of from 20°C to 90°C, preferably from 30°C to 80°C, and in particular from 40°C to 80°C. The temperature that is suitable depends on activation temperature of the thermally expandable thermoplastic microspheres included in the composition: such activation needs to be obviated by the selection of a curing temperature below the activation temperature and conventionally mitigating the use of such a temperature by increasing the duration for which it is applied. The presence in the composition of specific compounds, in particular, accelerators may also be determinative of the applicable curing temperature. That said, the temperature required to ensure a desired curing rate can be determined in the individual case by the skilled artisan, using simple preliminary tests if necessary. Of course, curing at lower temperatures within the aforementioned ranges is advantageous as it obviates the requirement to substantially heat or cool the mixture from the usually prevailing ambient temperature. Where applicable, however, the temperature of the mixture formed from the respective elements of the composition may be raised above the mixing temperature and / or the application temperature using conventional means, including microwave induction.

Upon curing, it is preferred that the layer of thermally debondable adhesive layer (12) has a thickness of from from 50 to 300 µm, for instance from 100 to 300 µm or from 150 to 250 µm.

For surety, it is noted that the curable one component (1K) composition from which the thermally debondable adhesive layer (12) is derived and the composition from which fixative layer (14) is derived may be independently cured. Alternatively, the respective compositions may be simultaneously cured where the operable curing conditions for each composition are compatible.

### a) Thermally Expandable Microspheres

The curable adhesive composition and the cured adhesive layer (12) obtained therefrom comprise thermally-expandable thermoplastic microspheres, which microspheres expand upon exposure to elevated temperature and - in expanding - enable a debonding effect.

The thermally expandable thermoplastic microspheres typically have a core-shell structure, wherein the shell is formed from a cross-linked co-polymer and the core is composed of a blowing agent. Further, the thermally expandable thermoplastic microspheres should expand when they are exposed to a temperature of at least 90°C for example from 100 to 200°C, from 100 to 170°C or from 100 to 140°C. Nominally that temperature may be applied using any suitable means, including but not limited to thermal sources, sonication probes or electromagnetic sources.

In certain embodiments, the curable one component (1K) composition may comprise, based on the total weight of the composition, from 10 to 40 wt.%, for example from 15 to 40 wt.% or from 20 to 40 wt.% of a) said thermally-expandable thermoplastic microspheres. When the loading of the thermally-expandable thermoplastic microspheres falls within the above-defined ranges, the microspheres can effectively contribute - upon their actuation and expansion within the cured adhesive - to breaking of the bond line: further the solid content of the curable composition ensures its applicability. Where the amount of thermally-expandable thermoplastic microspheres is below 10 wt.%, bond breakage may be incomplete. Where the amount of thermally-expandable thermoplastic microspheres is above 40 wt.%, the solids content of the one component (1K) composition may be too high without providing any additional technical benefit to debonding.

Suitable cross-linked copolymers for the shell of the microspheres may be prepared by copolymerization of any suitable monomers or co-monomers and more particularly from the copolymerization of a monomer mixture comprising: i) at least one non-ionic mono-ethylenically unsaturated monomer; and, ii) at least one crosslinking monomer having two or more ethylenically unsaturated groups. The cross-linked shell copolymer will typically comprise, based on the weight of the copolymer, from 0.1 to 30 wt.%, of the residues of ii) said at least one crosslinking monomer.

As regards i) said at least one non-ionic mono-ethylenically unsaturated monomer, mention may be made of the use of at least one monomer selected from the group consisting of: styrene; vinyltoluene; ethylene; butadiene; vinyl acetate; vinyl chloride; vinylidene chloride; (meth)acrylonitrile; (meth)acrylamide; C₁-C₂₀ alkyl esters of (meth)acrylic acid such as methyl (meth)acrylate, ethyl (meth)acrylate, butyl (meth)acrylate, 2-ethylhexyl (meth)acrylate, lauryl (meth)acrylate, palmityl (meth)acrylate and stearyl (meth)acrylate; C₂-C₂₀ alkenyl esters of (meth)acrylic acid, such as oleyl (meth)acrylate; benzyl (meth)acrylate; hydroxyl-containing monomers, in particular C₁-C₁₀ hydroxyalkyl (meth)acrylates, such as hydroxyethyl (meth)acrylate and hydroxypropyl (meth)acrylate; glycidyl (meth)acrylate; and, mixtures thereof. In certain embodiments, the crosslinked copolymer comprises residues of methyl methacrylate.

It is noted that the polymer may also be a copolymer prepared by the copolymerization of two or more non-ionic mono-ethylenically unsaturated monomers as listed above. Preferred monomer combinations include: acrylonitrile/methyl (meth)acrylate; styrene/methyl (meth)acrylate; acrylamide/methyl (meth)acrylate; and, acrylonitrile/hydroxyethyl (meth)acrylate. In certain embodiments, the cross-linked polymer comprises residues of acrylonitrile and methyl methacrylate.

Exemplary crosslinking monomers ii) having two or more ethylenically unsaturated groups include diacrylates or dimethacrylates of at least dihydric saturated alcohols. Exemplary crosslinking monomers, which may be used alone or in combination, include but are not limited to: ethylene glycol diacrylate; ethylene glycol dimethacrylate; 1,2-propylene glycol diacrylate; 1,2-propylene glycol dimethacrylate; 1,4-butanediol diacrylate; 1,4-butanediol dimethacrylate; hexanediol diacrylate; hexanediol dimethacrylate; neopentylglycol diacrylate; neopentylglycol dimethacrylate; 3-methylpentanediol diacrylate; and, 3-methylpentanediol dimethacrylate.

A further class of cross-linking monomers ii) comprises diacrylates or dimethacrylates of poly(C₂-C₃)alkylene glycols having weight average molecular weights (Mw) of from 200 to 9000 g/mol. for example from 400 to 2000 g/mol. It is noted that only the homopolymers of ethylene oxide or propylene oxide can be used, but also: block copolymers of ethylene oxide and propylene oxide; and / or, random copolymers of ethylene oxide and propylene oxide, which comprise a random distribution of the ethylene oxide and propylene oxide units. Similarly, the oligomers of ethylene oxide and/or propylene oxide are useful for preparing the crosslinkers, examples being diethylene glycol diacrylate, diethylene glycol dimethacrylate, triethylene glycol diacrylate, triethylene glycol dimethacrylate, tetraethylene glycol diacrylate and/or tetraethylene glycol dimethacrylate.

The core of the thermally-expandable thermoplastic microspheres is preferably composed of physical blowing agent. Suitable compounds for the physical blowing agent, which may be used alone or in combination, include but are not limited to: alkanes, such a propane, n-butane, n-pentane and isopentane; fluoroalkanes, such as trifluoromethane, difluoromethane, 1,1,1,3,3-pentafluorobutane, 1,1,1,3,3-pentafluoropropane, 1,1,1,2-tetrafluoroethane, difluoroethane and 1,1,1,2,3,3,3-heptafluoropropane; perfluoroalkanes, such as carbon tetrafluoride (CF₄), hexafluoroethane (C₂F₆), octafluoropropane (CsFs), octafluorocyclobutane (C₄F₈) and decafluoroisobutane (C₄F₁₀); hydrofluoro-olefins, such as 1,3,3,3-tetrafluoropropene; hydrochlorofluoro olefins, such as 1-chloro-3,3,3-trifluoropropene; cycloalkanes with at least 4 carbon atoms, such as cyclopentane and cyclohexane; dialkyl ethers such as dimethyl ether, methyl ethyl ether and methyl butyl ether; esters, such a methyl formate; ketones, such as acetone; acetals; and tetra(C₁-C₃)alkylsilanes, in particular tetramethylsilane.

In a preferred embodiment, the physical blowing agent comprises at least one hydrocarbon selected from the group consisting of: C₃-C₅ alkanes; and, C₅-C₆ cycloalkanes. In particular, the physical blowing agent may comprise at least one of n-pentane, isopentane and cyclopentane. With the use of the rigid foams as insulation in cooling appliances, cyclopentane is preferred. The hydrocarbons can be used in admixture with water.

The thermally expandable microspheres can be prepared by seed swelling of the crosslinked polymer and encapsulation of the blowing agents.

The thermally expandable thermoplastic microspheres should desirably have a mean volume particle size (Dv50), as measured by laser diffraction, of from 5 to 100 µm, such as from 5 to 75 µm, preferably from 5 to 50 µm and more preferably from 10 to 30 µm. The thermally expandable thermoplastic microspheres may, for example, have a mean volume particle size (Dv50), as measured by laser diffraction, of from 12 to 20 µm, or from 13 to 19 µm. For surety, the above-defined particle size ranges relate to the particle before their expansion under thermal actuation.

Suitable commercially available thermally expandable thermoplastic microspheres for use in the present disclosure include but are not limited to: Expancel 031DU40, available from Nouryon.

### b) Epoxy Resin

The one component (1K) composition of the present disclosure comprises b) at least one epoxide compound. The composition may typically comprise from 30 to 70 wt.%, for example from 40 to 70 wt.% or from 50 to 70 wt.% of b) said at least one epoxide compound, based on the weight of said composition.

Epoxide compounds as used herein for constituent b) may include mono-functional epoxide compounds, multi- or poly-functional epoxide compounds, and combinations thereof. The epoxy resins may be pure compounds but equally may be mixtures epoxide functional compounds, including mixtures of compounds having different numbers of epoxide groups per molecule. An epoxide compound resin may be saturated or unsaturated, aliphatic, cycloaliphatic, aromatic or heterocyclic and may be substituted. Further, the epoxide compound may also be monomeric or polymeric.

Without intention to limit the present disclosure, illustrative monoepoxide compounds include: alkylene oxides; epoxy-substituted cycloaliphatic hydrocarbons, such as cyclohexene oxide, vinylcyclohexene monoxide, (+)-cis-limonene oxide, (+)-cis,trans-limonene oxide, (-)-cis,trans-limonene oxide, cyclooctene oxide, cyclododecene oxide and α-pinene oxide; epoxy-substituted aromatic hydrocarbons; monoepoxy substituted alkyl ethers of monohydric alcohols or phenols, such as the glycidyl ethers of aliphatic, cycloaliphatic and aromatic alcohols; monoepoxy-substituted alkyl esters of monocarboxylic acids, such as glycidyl esters of aliphatic, cycloaliphatic and aromatic monocarboxylic acids; monoepoxy-substituted alkyl esters of polycarboxylic acids wherein the other carboxy group(s) are esterified with alkanols; alkyl and alkenyl esters of epoxy-substituted monocarboxylic acids; epoxyalkyl ethers of polyhydric alcohols wherein the other OH group(s) are esterified or etherified with carboxylic acids or alcohols; and, monoesters of polyhydric alcohols and epoxy monocarboxylic acids, wherein the other OH group(s) are esterified or etherified with carboxylic acids or alcohols.

By way of example, the following glycidyl ethers might be mentioned as being particularly suitable monoepoxide compounds for use herein: methyl glycidyl ether; ethyl glycidyl ether; propyl glycidyl ether; butyl glycidyl ether; pentyl glycidyl ether; hexyl glycidyl ether; cyclohexyl glycidyl ether; octyl glycidyl ether; 2-ethylhexyl glycidyl ether; allyl glycidyl ether; benzyl glycidyl ether; phenyl glycidyl ether; 4-tert-butylphenyl glycidyl ether; 1-naphthyl glycidyl ether; 2-naphthyl glycidyl ether; 2-chlorophenyl glycidyl ether; 4-chlorophenyl glycidyl ether; 4-bromophenyl glycidyl ether; 2,4,6-trichlorophenyl glycidyl ether; 2,4,6-tribromophenyl glycidyl ether; pentafluorophenyl glycidyl ether; o-cresyl glycidyl ether; m-cresyl glycidyl ether; and, p-cresyl glycidyl ether.

In an embodiment, the monoepoxide compound conforms to Formula (EI) herein below: 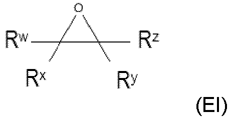 wherein: R^{w}, R^{x}, R^{y} and R^{z} may be the same or different and are independently selected from hydrogen, a halogen atom, a C₁-C₈ alkyl group, a C₃ to C₁₀ cycloalkyl group, a C₂-C₁₂ alkenyl, a C₆-C₁₈ aryl group or a C₇-C₁₈ aralkyl group, with the proviso that at least one of R^{y} and R^{z} is not hydrogen.

It is preferred that R^{w}, R^{x} and R^{y} are hydrogen and R^{z} is either a phenyl group or a C₁-C₈ alkyl group and, more preferably, a C₁-C₄ alkyl group.

Having regard to this embodiment, exemplary monoepoxides include: ethylene oxide; 1,2-propylene oxide (*propylene oxide*); 1,2-butylene oxide; cis-2,3-epoxybutane; trans-2,3-epoxybutane; 1,2-epoxypentane; 1,2-epoxyhexane; 1,2-heptylene oxide; decene oxide; butadiene oxide; isoprene oxide; and, styrene oxide.

In the present disclosure, reference is also made to using at least one monoepoxide compound selected from the group consisting of: ethylene oxide; propylene oxide; cyclohexene oxide; (+)-cis-limonene oxide; (+)-cis,trans-limonene oxide; (-)-cis,trans-limonene oxide; cyclooctene oxide; and, cyclododecene oxide.

Again, without intention to limit the present disclosure, suitable polyepoxide compounds may be liquid, solid or in solution in solvent. Further, such polyepoxide compounds should have an epoxide equivalent weight of from 100 to 700 g/eq, for example from 120 to 320 g/eq. And generally, diepoxide compounds having epoxide equivalent weights of less than 500 g/eq. or even less than 400 g/eq. are preferred: this is predominantly from a costs standpoint, as in their production, lower molecular weight epoxy resins require more limited processing in purification.

As examples of types or groups of polyepoxide compounds which may be polymerized in present invention, mention may be made of: glycidyl ethers of polyhydric alcohols and polyhydric phenols; glycidyl esters of polycarboxylic acids; and, epoxidized polyethylenically unsaturated hydrocarbons.

Suitable diglycidyl ether compounds may be aromatic, aliphatic or cycloaliphatic in nature and, as such, can be derivable from dihydric phenols and dihydric alcohols. And useful classes of such diglycidyl ethers are: diglycidyl ethers of aliphatic and cycloaliphatic diols, such as 1,2-ethanediol, 1,4-butanediol, 1,6-hexanediol, 1,8-octanediol, 1,12-dodecanediol, cyclopentane diol and cyclohexane diol; bisphenol A based diglycidylethers; bisphenol F diglycidyl ethers; diglycidyl o-phthalate, diglycidyl isophthalate and diglycidyl terephthalate; polyalkyleneglycol based diglycidyl ethers, in particular polypropyleneglycol diglycidyl ethers; and, polycarbonatediol based glycidyl ethers. Other suitable diepoxides which might also be mentioned include: diepoxides of double unsaturated fatty acid C₁-C₁₈ alkyl esters; butadiene diepoxide; polybutadiene diglycidyl ether; vinylcyclohexene diepoxide; and, limonene diepoxide.

Further illustrative polyepoxide compounds include but are not limited to: glycerol polyglycidyl ether; trimethylolpropane polyglycidyl ether; pentaerythritol polyglycidyl ether; diglycerol polyglycidyl ether; polyglycerol polyglycidyl ether; and, sorbitol polyglycidyl ether.

And examples of highly preferred polyepoxide compounds include: bisphenol-A epoxy resins, such as DER^{™} 331, DER^{™} 330, DER^{™} 337 and DER^{™} 383; bisphenol-F epoxy resins, such as DER^{™} 354; bisphenol-A/F epoxy resin blends, such as DER^{™} 353; aliphatic glycidyl ethers, such as DER^{™} 736; polypropylene glycol diglycidyl ethers, such as DER^{™} 732; solid bisphenol-A epoxy resins, such as DER^{™} 661 and DER^{™} 664 UE; solutions of bisphenol-A solid epoxy resins, such as DER^{™} 671-X75; epoxy novolac resins, such as DEN^{™} 438; brominated epoxy resins such as DER^{™} 542; castor oil triglycidyl ether, such as ERISYS^{™} GE-35H; polyglycerol-3-polyglycidyl ether, such as ERISYS^{™} GE-38; and, sorbitol glycidyl ether, such as ERISYS^{™} GE-60.

In an important embodiment, constituent b) of the one component (1K) composition comprises:
b)i) at least one liquid polyglycidyl ether of a polyhydric phenol, said polyglycidyl ether being characterized by a viscosity of from 100 to 5000 mPa.s, as determined at 25°C and 50% Relative Humidity; and,
b)ii) at least one liquid epoxide compound which acts as a diluent for said constituent b)i) and which has from 1 to 6 epoxide groups per molecule.

For example, the one component (1K) composition may comprise, based on the weight of the composition: from 30 to 60 wt.%, preferably from 30 to 50 wt.% and more preferably from 30 to 45 wt.% of b)i) said at least one liquid polyglycidyl ether; and, from 1 to 10 wt.% preferably from 2 to 10 wt.% and more preferably from 5 to 10 wt.% of b)ii) said at least one liquid epoxide compound which acts as a diluent for said constituent b)i) and which has from 1 to 6 epoxide groups per molecule.

In this embodiment, it is preferred that the or each liquid polyglycidyl ether of constituent b)i) has a viscosity of from 500 to 5000 mPa.s, as determined at 25°C and 50% Relative Humidity. In particular, the or each polyglycidyl ether of constituent b)i) may have a viscosity of from 500 to 4000 mPa.s or from 1000 to 3000 mPa.s, as determined at 25°C and 50% Relative Humidity.

In an alternative statement of preference, which is not intended to be mutually exclusive of the viscosity conditions given above, the or each liquid polyglycidyl ether of constituent b)i) should have an epoxide equivalent weight of from 100 to 700 g/eq, for example from 100 to 320 g/eq. And generally, polyglycidyl ethers having epoxide equivalent weights of less than 500 g/eq. or even less than 400 g/eq. are preferred: this is predominantly from a costs standpoint, as in their production, lower molecular weight epoxy resins require more limited processing in purification.

In an important example, constituent b)i) of the composition comprises or consists of at least one digylcidyl ether of a dihydric phenol, said diglycidyl ether being characterized by a viscosity of from 100 to 5000 mPa.s as determined at 25°C and 50% Relative Humidity. In particular, constituent b)i) of the composition comprises or consists of at least one diglycidyl ether chosen from: diglycidyl ethers of bisphenol A; diglycidyl ethers of bisphenol F; and, mixtures thereof.

Examples of suitable bisphenol-A epoxy resins include, but are not limited to: DER^{™} 331, DER^{™} 332 and DER^{™} 383, available from Olin; JERTM 828, available from Mitsubishi Chemical Corporation; Epotec YD 128, available from Aditya Birla Chemicals Limited; and, Epiclon EXA-850CRP, available from Dic Corporation. Examples of suitable bisphenol-F epoxy resins include, but are not limited to: DER^{™} 354, available from Olin; and, Epiclon 830, Epiclon 830S, Epiclon EXA-830CRP, Epiclon EXA-830LVP, Epiclon 835 and Epiclon EXA-835LV, available from Dic Corporation. An exemplary bisphenol-A/F epoxy resin blend is DER^{™} 353, available from Olin.

In this embodiment, constituent b)ii) said at least one liquid epoxide compound acts as a diluent for said constituent b)i) and has from 1 to 6 epoxide groups per molecule. For surety, this epoxide compound (b)ii) is distinct from the compound or compounds included in constituent b)i) of the composition.

The liquid epoxide compounds b)ii) may be pure compounds but equally may be mixtures of epoxide functional compounds, including mixtures of compounds having different numbers of epoxide groups per molecule. The liquid epoxide compound may be saturated or unsaturated, aliphatic, cycloaliphatic, aromatic or heterocyclic and may be substituted. Further, the liquid epoxide compound may also be monomeric or polymeric.

It is preferred that the liquid epoxide compounds have from 2 to 6 epoxide groups per molecule, such as from 2 to 5 or from 2 to 4 epoxide groups per molecule. Liquid epoxide compounds having 3 epoxide groups per molecule may be mentioned in particular. In an alternative statement of preference, which is not intended to be mutually exclusive of that given above, the liquid epoxide compound should have an epoxide equivalent weight of from 100 to 700 g/eq, for example from 100 to 320 g/eq. And generally, polyepoxide compounds having epoxide equivalent weights of less than 500 g/eq. or even less than 400 g/eq. are preferred.

As examples of types or groups of liquid epoxide compounds which may be included in the composition in constituent b)ii), mention may be made of: glycidyl ethers of polyhydric alcohols; glycidyl ethers of polyhydric phenols; glycidyl esters of polycarboxylic acids; and, polyfunctional glycidylamines.

Exemplary polyglycidyl ethers include but are not limited to: glycerol polyglycidyl ether; trimethylolmethane triglycidyl ether; trimethylolethane triglycidyl ether; trimethylolpropane triglycidyl ether; pentaerythritol polyglycidyl ether; diglycerol polyglycidyl ether; polyglycerol polyglycidyl ether; sorbitol polyglycidyl ether; triphenylolmethane triglycidyl ether; trisphenol triglycidyl ether; trihydroxybiphenyl triglycidyl ether; tetraphenylol ethane triglycidyl ether; tetraglycidyl ether of tetraphenylol ethane; 1,2,6-hexanetriol triglycidyl ether; glycerol triglycidyl ether; diglycerol triglycidyl ether; glycerol ethoxylate triglycidyl ether; castor oil triglycidyl ether; fluoroglycinol triglycidyl ether; and, propoxylated glycerine triglycidyl ether.

Glycidyl esters of polycarboxylic acids having utility in the present disclosure in constituent b)ii) are preferably derived from polycarboxylic acids which contain three or more carboxylic acid groups and no other groups reactive with epoxide groups. The polycarboxylic acids can be aliphatic, cycloaliphatic, aromatic and heterocyclic. The preferred polycarboxylic acids are those which contain not more than 18 carbon atoms per carboxylic acid group of which suitable examples include but are not limited to: aconitic acid; propane-1,2,3-tricarboxylic acid (β-carboxyglutaric acid); trimer acids of unsaturated fatty acids, such as trimer acids of linseed fatty acids; trimellitic acid; trimesic acid; and, polymers and co-polymers of (meth)acrylic acid.

Exemplary polyglycidyl amines having utility in the present disclosure in constituent b)ii) include but are not limited to: N,N,N',N'- tetraglycidyl-4,4'methylene bisbenzenamine; p-aminophenol triglycidyl ether; m-aminophenol triglycidyl ether; tetraglycidyl bis(aminomethyl)cyclohexane; and, N,N,N',N'-tetraglycidyl-m-xylenediamine.

Examples of highly preferred liquid epoxide compounds for use in or as constituent b)ii) include: trimethylolethane triglycidyl ether; trimethylolpropane triglycidyl ether, such as Epodil 762 available from Evonik; pentaerythritol polyglycidyl ether, such as Epotec RD129 available from Azelis; castor oil triglycidyl ether, such as ERISYS^{™} GE-35H; polyglycerol-3-polyglycidyl ether, such as ERISYS^{™} GE-38; sorbitol glycidyl ether, such as ERISYS^{™} GE-60; Epikote 1032H60 (manufactured by Japan Epoxy Resins Co., Ltd.); Epikote 1031S (manufactured by Japan Epoxy Resins Co., Ltd.); TECHMORE VG3101 (manufactured by Mitsui Chemicals, Inc.); polyfunctional glycidylamines, such as Kane Ace 414 (available from Kaneka Corporation), ELM-100 (manufactured by Sumitomo Chemical Co., Ltd.), MY721 and MY0510 (manufactured by Ciba Specialty Chemicals Inc.), Araldite^{®} MY0600-CH (available from Hunstman) and Tetrad^{®} X and Tetrad^{®} C available from Mitsubushi Gas Chemicals Co.; and, dicyclopentadiene type epoxy resins, such as ZX-1257 (manufactured by Tohto Kasei Co., Ltd.) and HP-7200 (manufactured by Dainippon Ink and Chemicals Incorporated). The use of trimethylolethane triglycidyl ether and trimethylolpropane triglycidyl ether, independently or in combination, may be mentioned.

Independently of or additional to any embodiments mentioned above, constituent b) of the composition can, in certain embodiments, comprise epoxide-functional alkoxy silanes having the formula (ES):

E-(CH₂)ₙ-Si(R^{s})ₘ(OR')₃₋ₘ (ES)

wherein:
E is 2,3-epoxypropoxy, epoxycyclohexyl or epoxycyclopentyl;
n is from 1-10;
m is 0, 1 or 2;
each R^{s} is independently C₁-C₃ alkyl; and,
each R^{t} is independently C₁-C₃ alkyl.

In preferred compounds of Formula (ES): E is 2,3-epoxypropoxy; n is from 1 to 8; m is 0 or 1; R^{s}, when present, is methyl or ethyl; and, each R^{t} is independently methyl or ethyl.

Exemplary silanes, which may be used alone or in combination, include but are not limited to: 2-(3,4-epoxycyclohexyl)ethyltrimethoxysilane; 3-glycidoxypropyl methyldimethoxysilane; γ-glycidoxy propyl trimethoxy silane; γ-glycidoxy ethyl trimethoxy silane; γ-glycidoxymethyl trimethoxy silane; γ-glycidoxy methyl triethoxy silane; 3-glycidoxypropyl methyldiethoxysilane; γ-glycidoxy ethyl triethoxy silane; γ-glycidoxy propyl triethoxy silane; and, 8-glycidooxyoctyl trimethoxysilane. The use of γ-glycidoxy propyl trimethoxy silane may be mentioned in particular.

When present, the epoxide functional alkoxysilanes should constitute less than 20 wt.%, preferably less than 15 wt.% or less than 10 wt.%, based on the total weight of epoxide functional compounds in the composition.

The present disclosure also does not preclude the curable one component (1K) compositions from further comprising one or more cyclic monomers selected from the group consisting of: oxetanes; cyclic carbonates; cyclic anhydrides; and, lactones. The disclosures of the following citations may be instructive in disclosing suitable cyclic carbonate functional compounds: US Patent No. 3,535,342; US Patent No. 4,835,289; US Patent No. 4,892,954; UK Patent No. GB-A-1,485,925; and, EP-A-0 119 840. However, such cyclic co-monomers should constitute less than 20 wt.%, preferably less than 10 wt.% or less than 5 wt.%, based on the total weight of epoxide functional compounds in the composition.

### c) Curative for the Epoxide Compounds

As noted above, the composition comprises c) at least one compound which provides at least two amine hydrogens reactive toward epoxide groups. The composition may, in important embodiments, comprise at least one polyamine having at least two amine hydrogens reactive toward epoxide groups. However, it is not precluded that constituent c) of the composition comprises or consists of a latent amine which yields said reactive amine hydrogens upon exposure to a triggering condition.

When formulating the curable one component (1K) composition, the composition is characterized by a molar ratio of epoxide groups to epoxide-reactive groups (E^{R}) of 0.6:1 < E^{R} ≤ 1.2:1, for example from 0.9:1 to 1.1:1. The term epoxide reactive groups includes latent reactive groups.

In an alternative expression, which is not intended to be mutually exclusive of that given above, it is preferred that the one component (1K) composition comprises, based on the weight of the composition, from 0.01 to 25 wt.% of c) said at least one compound which provides at least two amine hydrogens reactive toward epoxide groups. Preferably said composition comprises from 0.1 to 15 wt.%, for example from 0.1 to 5 wt.% of c) said at least one compound which provides at least two amine hydrogens reactive toward epoxide groups.

Where constituent c) comprises or consists of a polyamine having at least two amine hydrogens reactive toward epoxide groups, it is preferred that the or each polyamine should contain primary and / or secondary amine groups and have an equivalent weight per primary or secondary amine group of not more than 150 g/eq., for example of not more than 125 g/eq.

Suitable polyamines, which may be used alone or in combination, include but are not limited to the following:
i) Aliphatic, cycloaliphatic or arylaliphatic primary diamines of which the following examples may be mentioned: 2,2-dimethyl-1,3-propanediamine; 1,3-pentanediamine (DAMP); 1,5-pentanediamine; 1,5-diamino-2-methylpentane (MPMD); 2-butyl-2-ethyl-1,5-pentanediamine (C11-neodiamine); 1,6-hexanediamine (hexamethylenediamine, HMDA); 2,5-dimethyl-1,6-hexanediamine; 2,2,4- and / or 2,4,4-trimethylhexamethylenediamine; 1,7-heptanediamine; 1,8-octanediamine; 1,9-nonanediamine; 1,10-decanediamine; 1,11-undecanediamine; 1,12-dodecanediamine; 1,2-, 1,3- and 1,4-diaminocyclohexane; bis(4-aminocyclohexyl)methane; bis(4-amino-3-methylcyclohexyl)methane; bis(4-amino-3-ethylcyclohexyl)methane; bis(4-amino-3,5-dimethylcyclohexyl)methane; bis(4-amino-3-ethyl-5-methylcyclohexyl)methane; 1-amino-3-aminomethyl-3,5,5-trimethylcyclohexane (isophorone diamine, IPDA); 2- and / or 4-methyl-1,3-diaminocyclohexane; 1,3-bis(aminomethyl)-cyclohexane; 1,4-bis(aminomethyl)cyclohexane; 2,5(2,6)-bis(aminomethyl)-bicyclo[2.2.1]heptane (norborane diamine, NBDA); 3(4),8(9)-bis(aminomethyl)tricyclo[5.2.1.0^{2,6}]-decane (TCD-diamine); 1,4-diamino-2,2,6-trimethylcyclohexane (TMCDA); 1,8-menthanediamine; 3,9-bis(3-aminopropyl)-2,4,8,10-tetraoxaspiro[5.5]undecane; and, 1,3-bis(aminomethyl)benzene (MXDA).
ii) Tertiary amine group-containing polyamines with two or three primary aliphatic amine groups of which the following specific examples may be mentioned: N,N'-bis(aminopropyl)-piperazine; N,N-bis(3-aminopropyl)methylamine; N,N-bis(3-aminopropyl)ethylamine; N,N-bis(3-aminopropyl)propylamine; N,N-bis(3-aminopropyl)cyclohexylamine; N,N-bis(3-aminopropyl)-2-ethyl-hexylamine; tris(2-aminoethyl)amine; tris(2-aminopropyl)amine; tris(3-aminopropyl)amine; and, the products from the double cyanoethylation and subsequent reduction of fatty amines derived from natural fatty acids, such as N,N-bis(3-aminopropyl)dodecylamine and N,N-bis(3-aminopropyl)tallow alkylamine, commercially available as Triameen^{®} Y12D and Triameen^{®} YT (from Akzo Nobel).
iii) Ether group-containing aliphatic primary polyamines of which the following specific examples may be mentioned: bis(2-aminoethyl)ether; 3,6-dioxaoctane-1,8-diamine; 4,7-dioxadecane-1,10-diamine; 4,7-dioxadecane-2,9-diamine; 4,9-dioxadodecane-1,12-diamine; 5,8-dioxadodecane-3,10-diamine; 4,7,10-trioxatridecane-1,13-diamine and higher oligomers of these diamines; bis(3-aminopropyl)polytetrahydrofuranes and other polytetrahydrofuran diamines; cycloaliphatic ether group-containing diamines obtained from the propoxylation and subsequent amination of 1,4-dimethylolcyclohexane, such as that material commercially available as Jeffamine^{®} RFD-270 (from Huntsman); polyoxyalkylenedi- or-triamines obtainable as products from the amination of polyoxyalkylenedi- and -triols and which are commercially available under the name of Jeffamine@ (from Huntsman), under the name of polyetheramine (from BASF) or under the name of PC Amines^{®} (from Nitroil). A particular preference may be noted for the use of Jeffamine^{®} D-230, Jeffamine^{®} D-400, Jeffamine^{®} D-600, Jeffamine^{®} D-2000, Jeffamine^{®} D-4000, Jeffamine^{®} T-403, Jeffamine^{®} T-3000, Jeffamine^{®} T-5000, Jeffamine^{®} EDR-104, Jeffamine^{®} EDR-148 and Jeffamine^{®} EDR-176, as well as corresponding amines from BASF or Nitroil.
iv) Primary diamines with secondary amine groups of which the following examples may be mentioned: 3-(2-aminoethyl)aminopropylamine, bis(hexamethylene)triamine (BHMT); diethylenetriamine (DETA); triethylenetetramine (TETA); tetraethylenepentamine (TEPA); pentaethylenehexamine (PEHA); higher homologs of linear polyethyleneamines, such as polyethylene polyamines with 5 to 7 ethyleneamine units (so-called "higher ethylenepolyamine," HEPA); products from the multiple cyanoethylation or cyanobutylation and subsequent hydrogenation of primary di- and polyamines with at least two primary amine groups, such as dipropylenetriamine (DPTA), N-(2-aminoethyl)-1,3-propanediamine (N3-amine), N,N'-bis(3-aminopropyl)ethylenediamine (N4-amine), N,N'-bis(3-aminopropyl)-1,4-diaminobutane, N5-(3-aminopropyl)-2-methyl-1,5-pentanediamine, N3-(3-aminopentyl)-1,3-pentanediamine, N5-(3-amino-1-ethylpropyl)-2-methyl-1,5-pentanediamine or N,N'-bis(3-amino-1-ethylpropyl)-2-methyl-1,5-pentanediamine.
v) Polyamines with one primary and at least one secondary amino group of which the following examples may be mentioned: N-butyl-1,2-ethanediamine; N-hexyl-1,2-ethanediamine; N-(2-ethylhexyl)-1,2-ethanediamine; N-cyclohexyl-1,2-ethanediamine; 4-aminomethyl-piperidine; N-(2-aminoethyl)piperazine; N-methyl-1,3-propanediamine; N-butyl-1,3-propanediamine; N-(2-ethylhexyl)-1,3-propanediamine; N-cyclohexyl-1,3-propanediamine; 3-methylamino-1-pentylamine; 3-ethylamino-1-pentylamine; 3-cyclohexylamino-1-pentylamine; fatty diamines such as N-cocoalkyl-1,3-propanediamine; products from the Michael-type addition reaction of primary aliphatic diamines with acrylonitrile, maleic or fumaric acid diesters, citraconic acid diesters, acrylic and methacrylic acid esters, acrylic and methacrylic acid amides and itaconic acid diesters, reacted in a 1:1 molar ratio; products from the partial reductive alkylation of primary polyamines with aldehydes or ketones, especially N-monoalkylation products of the previously mentioned polyamines with two primary amine groups and in particular of 1,6-hexanediamine, 1,5-diamino-2-methylpentane, 1,3-bis(aminomethyl)cyclohexane, 1,4-bis(aminomethyl)cyclohexane, 1,3-bis(aminomethyl)benzene, BHMT, DETA, TETA, TEPA, DPTA, N3-amine and N4-amine, wherein preferred alkyl groups are benzyl, isobutyl, hexyl and 2-ethylhexyl; and, partially styrenated polyamines such as those commercially available as Gaskamine@ 240 (from Mitsubishi Gas Chemical).
vi) Secondary diamines and, in particular, N,N'-dialkylation products of the previously mentioned polyamines with two primary amine groups, especially N,N'-dialkylation products of 1,6-hexanediamine, 1,5-diamino-2-methylpentane, 1,3-bis(aminomethyl)cyclohexane, 1,4-bis(aminomethyl)-cyclohexane, 1,3-bis(aminomethyl)benzene, BHMT, DETA, TETA, TEPA, DPTA, N3-amine or N4-amine, wherein preferred alkyl groups are 2-phenylethyl, benzyl, isobutyl, hexyl and 2-ethylhexyl.
vii) Aromatic polyamines of which mention may be made of: m- and p-phenylenediamine; 4,4'-, 2,4' and 2,2'-diaminodiphenylmethane; 3,3'-dichloro-4,4'-diaminodiphenylmethane (MOCA); 2,4- and 2,6-tolylenediamine; mixtures of 3,5-dimethylthio-2,4- and -2,6-tolylenediamine (available as Ethacure^{®} 300 from Albermarle); mixtures of 3,5-diethyl-2,4- and -2,6-tolylene diamine (DETDA); 3,3',5,5'-tetraethyl-4,4'-diaminodiphenylmethane (M-DEA); 3,3',5,5'-tetraethyl-2,2'-dichloro-4,4'-diaminodiphenylmethane (M-CDEA); 3,3'-diisopropyl-5,5'-dimethyl-4,4'-diaminodiphenylmethane (M-MIPA); 3,3',5,5'-tetraisopropyl-4,4'-diaminodiphenylmethane (M-DIPA); 4,4'-diamino diphenyl-sulfone (DDS); 4-amino-N-(4-aminophenyl)benzenesulfonamide; 5,5'-methylenedianthranilic acid; dimethyl-(5,5'-methylenedianthranilate); 1,3-propylene-bis(4-aminobenzoate); 1,4-butylene-bis(4-aminobenzoate); polytetramethylene oxide-bis(4-aminobenzoate) (available as Versalink^{®} from Air Products); 1,2-bis(2-aminophenylthio)ethane, 2-methylpropyl-(4-chloro-3,5-diaminobenzoate); and, tert.butyl-(4-chloro-3,5-diaminobenzoate).
viii) Polyamidoamines of which indicative members include the reaction products of monohydric or polyhydric carboxylic acids or the esters or anhydrides thereof, - in particular dimer fatty acids - and an aliphatic, cycloaliphatic or aromatic polyamine, for instance polyalkyleneamines such as DETA or TETA. Commercially available polyamidoamines include: Versamid^{®} 100, 125, 140 and 150 (from Cognis); Aradur^{®} 223, 250 and 848 (from Huntsman); Euretek^{®} 3607 and 530 (from Huntsman); and, Beckopox^{®} EH 651, EH 654, EH 655, EH 661 and EH 663 (from Cytec).

Any common latent epoxy curing agents used in the art can be used in the present disclosure without special limitations. Exemplary latent curatives which may be used in or as constituent c) of the composition include but are not limited to: ketimines obtainable by the reaction of aliphatic polyamines and ketones; polyethyleneimines, in particular polyethyleneimines having a weight average molecular weight (Mw) from 700 to 1,000,000; imidazole derivatives such as 2-heptadeoylimidazole, 2-phenyl-4,5-dihydroxymethylimidazole, 2-phenyl-4-methyl-5-hydroxymethylimidazole, 2-phenyl-4-benzyl-5-hydroxymethyl-imidazole; 2,4-diamino-8-2-methylimidazolyl-(1)-ethyl-5-triazine; addition products of triazine with isocyanuric acid; hydrazides, such as succinohydrazide, adipohydrazide, isophtholohydrazide o-oxybenzohydrazide and salicylohydrazide.

Still further suitable latent epoxy curing agents which may be used herein are described in: US Patent No. 4,546,155; US Patent No. 7,226,976; US Patent No. 4,833,226; JP2008214567; UK Patent No. GB 1,121,196; WO2014/165423; and, US Patent No. 5,077,376. And examples of commercially available latent epoxy curing agents include Ajicure PN-23, PN-40, PN-H, MY-24 and PN-50 commercially available from Ajinomoto Co., Inc.; EH-4337S, EH-3293S and EH-4357S commercially available from Asahi Denka Co. Ltd.; Novacure HX-3722 and HXA-3921 HP commercially available from Asahi Kasei Kogyo. K.K.; and, Sunmide LH-210, Ancamin 2014AS/FG and Ancamin 2337S commercially available from Air Products and Chemicals, Inc.

In addition to the above, it is envisaged that constituent c) of the composition may comprise or consist of dicyandiamide. When employed, it is preferred that said dicyandiamide is in finely divided form: a mean volume particle size (Dv50) of from 0.5 to 100 µm, for example of from 1 to 50 µm or from 2 to 20 µm might be noted as desirable. Said particle size refers to the diameter or largest dimension of a particle in a distribution of particles and is measurable via dynamic light scattering.

### d) Accelerator

The composition of the present invention comprises d) at least one accelerator, which accelerator is a substance that promotes the reaction between the epoxide groups and the epoxide-reactive groups of the curative, in particular the reaction between the amine and the epoxide groups. The composition may preferably comprise, based on the weight of the composition, from 0.01 to 5 wt.% of d) said at least one accelerator. In certain embodiments, the composition may comprise from 0.01 to 2 wt.%, for example from 0.01 to 1 wt.% of d) said at least one accelerator.

Without intention to the limit the accelerators used in the present disclosure, mention may be made of the following suitable accelerators: i) acids or compounds hydrolyzable to acids, in particular a) organic carboxylic acids, such as acetic acid, benzoic acid, salicylic acid, 2-nitrobenzoic acid and lactic acid; b) organic sulfonic acids, such as methanesulfonic acid, p-toluenesulfonic acid and 4-dodecylbenzenesulfonic acid; c) sulfonic acid esters; d) inorganic acids, such as phosphoric acid; e) Lewis acid compounds, such as BF₃ amine complexes, SbF₆ sulfonium compounds, bis-arene iron complexes; f) Bronsted acid compounds, such as pentafluoroantimonic acid complexes; and, e) mixtures of the aforementioned acids and acid esters; ii) phenols, in particular bisphenols; ii) tertiary amines, such as 2-piperazin-1-ylethanamine, 1,4-diazabicyclo[2.2.2]octane, benzyldimethylamine, α-methylbenzyl dimethylamine, triethanolamine, dimethylamino propylamine and salts of such tertiary amines; iv) imidazoles, including imidazole, 1-methylimidazole, 2-methylimidazole, 2-ethylimidazole, 2-ethyl-4-methylimidazole, 2-undecylimidazole, 2-heptadecylimidazole, 2-phenylimidazole, 2-phenyl-4-methylimidazole, 2-phenyl-4,5-dihydroxymethylimidazole, 2-phenyl-4-methyl-5-hydroxymethylimidazole, 1-cyanoethyl-2-undecylimidazole, 1-cyanoethyl-2-ethyl-4-imidazole, 2-phenylimidazole, 1-benzyl-2-phenylimidazole, benzimidazole, 2-phenyl-4, 5-dihydroxymethylimidazole, and 2, 3-dihydro-1H-pyrrolo [1,2-a] benzimidazole, 1-vinylimidazole and N-(3-aminopropyl)imidazole; v) quaternary ammonium salts, such as benzyltrimethyl ammonium chloride; vi) amidines, such as 1,8-diazabicyclo[5.4.0]undec-7-ene; vii) urea derivatives; viii) thiourea derivatives; ix) guanidines, such as 1,1,3,3-tetramethylguanidine; x) phenol resins; and, xi) phosphites, such as di- and triphenylphosphites.

For surety, it is noted that the constituent d) may comprise an encapsulated imidazole compound, such as an encapsulated form of one of the above mentioned imidazole compounds. The encapsulated imidazole may be in the form of particles have a mean volume particle size (Dv50) of from 1 to 50 microns, for example from 1 to 20 microns. The latency provided by the encapsulation may serve to improve the storage stability of the one component (1K) composition. Exemplary commercially available encapsulated imidazole compounds include: HX3941HP, HX A3042HP, HX A3922HP, HX A3792, HX A3748, HX3721, HX3722, HX3088, HX3741, HX3742, HX3713, HX3742, and HX3613 manufactured by Asahi Company; and, Curezol 2MZ available from Evonik Industries.

The skilled artisan will recognize that the selection of an accelerator is not simply concerned with adding the fastest accelerator. Other factors determinative in the selection of accelerators include: cost; toxicity; solubility; processing effects, such as working time, premature gelation, exothermic degradation, expansion and off-gassing; final properties, such as glass transition temperature (T_{g}), modulus, strength, elongation at break and chemical resistance; regulatory concerns; and, ease of use.

In embodiments of the present disclosure, constituent d) comprises or consists of at least one accelerator selected from the group consisting of: tertiary amines; urea derivatives; thiourea derivatives; and, amidines. In particular, the cure accelerator d) may comprise or consist of at least one urea derivative of Formula (V) or Formula (VI): 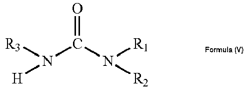 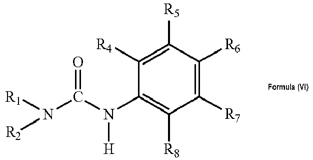 wherein:
at least one residue R¹, R², R³ is not hydrogen;
R¹ and R² are independently selected from hydrogen, C₁-C₁₈ alkyl and C₃-C₁₈ cycloalkyl;
R³ is hydrogen, C₁-C₁₈ alkyl, C₃-C₁₈ cycloalkyl, C₆-C₁₈ aryl, C₆-C₁₈ aralkyl, C₆-C₁₈-alkylaryl, C₁-C₁₈ alkyl substituted with -NHC(O)NR¹R², C₃-C₁₈ cycloalkyl substituted with -NHC(O)NR¹R², C₆-C₁₈ aryl substituted with -NHC(O)NR¹R²; C₆-C₁₈ aralkyl substituted with -NHC(O)NR¹R²; and, C₆-C₁₈ aralkyl substituted with -NHC(O)NR¹R²; and,
R⁴, R⁵, R⁶, R⁷ and R⁸ are independently selected from hydrogen, halogen, C₁-C₁₈ alkyl, C₃ to C₁₈ cycloalkyl, C₆-C₁₈ aryl, C₆-C₁₈ aralkyl, C₆-C₁₈-alkylaryl , -CF₃, - NHC(O)NR¹R², C₁-C₁₈ alkyl substituted with -NHC(O)NR¹R², C₃-C₁₈ cycloalkyl substituted with -NHC(O)NR¹R², C₆-C₁₈ aryl substituted with -NHC(O)NR¹R²; C₆-C₁₈ aralkyl substituted with -NHC(O)NR¹R²; and, C₆-C₁₈ aralkyl substituted with -NHC(O)NR¹R².

The substituents (R¹-R⁸) of the urea derivative of Formulae (V) and (VI) should be selected to ensure any said derivative(s) is liquid at room temperature and 1 atmosphere pressure and has a viscosity of less than 1 Pa.s, preferably less than 100 mPa.s at 25°C. Additional to those considerations, it is preferred that the urea derivatives of Formulae (V) and (VI) meet the following conditions:
at least one residue R¹, R², R³ is not hydrogen;
R¹ and R² are independently selected from hydrogen and C₁-C₄ alkyl; and,
R⁴, R⁵, R⁶, R⁷ and R⁸ are independently selected from hydrogen, halogen, C₁-C₄ alkyl and - NHC(O)NR¹R².

A particular reference to the use of N,N-diethylurea, N,N-dipropylurea, N,N-ethyl-methylurea, N,N-dimethylurea, 1,1'-(4-methyl-m-phenylene)-bis-(3,3-dimethylurea) or 1,1'-(2-methyl-m-phenylene)-bis-(3,3-dimethylurea) may be made.

Further, exemplary commercially available urea derivatives having utility in the present disclosure include: Omicure U-24, Omicure U-35, Omicure U-410, Omicure U-52, Omicure U-415 and Omicure U-405, available from CVC Corporation; Amicure UR, Amicure UR7/10, Amicure UR200, Amicure UR300, Amicure UR500, Amicure UR2T, Amicure UR41 and Amicure UR-D, available from The Air Product Corporation; and, Dyhard UR200, Dyhard UR300, Dyhard UR500, Dyhard UR700 and Ecure 30, available from Alzchem Corporation.

### e) Additives and Adjunct Ingredients

The curable, liquid-state compositions and the cured adhesive layer (12) obtained therefrom will typically further comprise adjuvants and additives that can impart improved properties to these compositions. For instance, the adjuvants and additives may impart one or more of: improved elastic properties; improved elastic recovery; longer enabled processing time; faster curing time; and, lower residual tack. Included among such adjuvants and additives are: tougheners; plasticizers; stabilizers, including UV stabilizers and antioxidants; wax; reactive diluents; dessicants or moisture scavengers; adhesion promoters; fungicides; flame retardants; rheological adjuvants; color pigments or color pastes; solvents; and, non-reactive diluents.

Such adjuvants and additives can be used in such combination and proportions as desired, provided they do not adversely affect the nature and essential properties of the composition. While exceptions may exist in some cases, these adjuvants and additives should not *in toto* comprise more than 40 wt.% of the total composition and preferably should not comprise more than 30 wt.% or even more than 20 wt.% of the composition.

The presence of tougheners in the curable, liquid-state composition - in an amount up to 10 wt.%, based on the weight of the composition - can, in certain circumstances, be advantageous to the debonding of the obtained cured adhesive. Without intention to be bound by theory, tougheners can facilitate phase separation within the cured adhesive when actuating thermal conditions are applied. Exemplary tougheners may be selected from: epoxy-elastomer adducts; and, toughening rubber in the form of core-shell particles dispersed in the epoxy resin matrix.

Elastomer-containing adducts may be used individually or a combination of two or more particular adducts might be used. Moreover, each adduct may independently be selected from solid adducts or liquid adducts at a temperature of 23°C. Typically, useful adducts will be characterized by a ratio by weight of epoxy to elastomer of from 1:5 to 5:1, for example from 1:3 to 3:1. And an instructive reference regarding suitable epoxy / elastomer adducts is US Patent Publication 2004/0204551. Moreover, exemplary commercial epoxy/elastomer adducts for use herein include but are not limited to: HYPDX RK8-4 commercially available from CVC Chemical; and, B-Tough A3 available from Croda Europe Limited.

The term *"core shell rubber"* or CSR is being employed in accordance with its standard meaning in the art as denoting a rubber particle core formed by a polymer comprising an elastomeric or rubbery polymer as a main ingredient and a shell layer formed by a polymer which is graft polymerized onto the core. The shell layer partially or entirely covers the surface of the rubber particle core in the graft polymerization process. By weight, the core should constitute at least 50 wt.% of the core-shell rubber particle.

The polymeric material of the core should have a glass transition temperature (T_{g}) of no greater than 0°C and preferably a glass transition temperature (T_{g}) of -20⁰C or lower, more preferably -40⁰C or lower and even more preferably -60⁰C or lower. The polymer of the shell is non-elastomeric, thermoplastic or thermoset polymer having a glass transition temperature (T_{g}) of greater than room temperature, preferably greater than 30°C and more preferably greater than 50°C.

Without intention to limit the invention, the core may be comprised of: a diene homopolymer, for example, a homopolymer of butadiene or isoprene; a diene copolymer, for example a copolymer of butadiene or isoprene with one or more ethylenically unsaturated monomers, such as vinyl aromatic monomers, (meth)acrylonitrile or (meth)acrylates; polymers based on (meth)acrylic acid ester monomers, such as polybutylacrylate; and, polysiloxane elastomers such as polydimethylsiloxane and crosslinked polydimethylsiloxane.

Similarly without intention to limit the present invention, the shell may be comprised of a polymer or copolymer of one or more monomers selected from: (meth)acrylates, such as methyl methacrylate; vinyl aromatic monomers, such as styrene; vinyl cyanides, such as acrylonitrile; unsaturated acids and anhydrides, such as acrylic acid; and, (meth)acrylamides. The polymer or copolymer used in the shell may possess acid groups that are cross-linked ionically through metal carboxylate formation, in particular through forming salts of divalent metal cations. The shell polymer or copolymer may also be covalently cross-linked by monomers having two or more double bonds per molecule.

It is preferred that any included core-shell rubber particles have a mean volume particle size (Dv50) of from 10 to 300 nm, for example from 50 to 250 nm: said particle size refers to the diameter or largest dimension of a particle in a distribution of particles and is measured via dynamic light scattering. For completeness, the present application does not preclude the presence of two or more types of core shell rubber (CSR) particles with different particle size distributions in the composition to provide a balance of key properties of the resultant cured product, including shear strength, peel strength and resin fracture toughness.

The core-shell rubber may be selected from commercially available products, examples of which include: Paraloid EXL 2650A, EXL 2655 and EXL2691 A, available from The Dow Chemical Company; Clearstrength^{®} XT100, available from Arkema Inc.; the Kane Ace^{®} MX series available from Kaneka Corporation, and in particular MX 120, MX 125, MX 130, MX 136, MX 551, MX553; and, METABLEN SX-006 available from Mitsubishi Rayon.

The addition of certain additives may promote the adhesion of the curable, liquid-state composition - and the cured adhesive obtained therefrom - to particular substrates. In this regard, the curable, liquid-state composition may comprise from 0 to 5 wt.%, for example from 0.5 to 5 wt.% based on the weight of the composition, of at least one adhesion promoter.

In certain embodiments, the adhesion promoter may be selected from the group consisting of: morin(2-(2,4-dihydroxy phenyl)-3,5,7-trihydroxy-4H-1-cumarone-4-ketone); 3,7-dihydroxy-2-naphthoic acid (3,7-dihydroxy naphthlene-2-carboxylic acid); pyrogallol carboxylic acid (2,3,4-trihydroxybenzoic acid); 3,4-dihydroxy-benzene guanidine-acetic acid; gallic acid (3,4,5-trihydroxybenzoic acid); para-aminosalicylic acid (4-amino-2-hydroxybenzoic acid, PAS); flutter acid (4,4'-methylene-bis(3-hydroxy-2-naphthoic acid)); citric acid (2-hydroxypropane-1,2,3-tricarboxylic acid); and, mixtures thereof. Of these compounds a preference for the use - alone or in combination - of citric acid, gallic acid and, in particular, para-aminosalicylic acid (PAS) may be mentioned.

It is noted that compounds having metal chelating properties may also be used in the compositions of the present disclosure to help enhance the adhesion of the cured composition to a substrate surface. Also suitable for use as adhesion promoters are the acetoacetate-functionalized modifying resins sold by King Industries under the trade name K-FLEX XM-B301.

*A "plasticizer"* for the purposes of this disclosure is a substance that decreases the viscosity of the curable, liquid-state composition and thus facilitates its processability. Herein the plasticizer may constitute up to 20 wt.%, for example from 1 to 10 wt.% or from 1 to 7 wt.%, based on the total weight of the composition, and is preferably selected from the group consisting of: diurethanes; ethers of monofunctional, linear or branched C4-C16 alcohols, such as Cetiol OE (obtainable from BASF); esters of abietic acid, butyric acid, thiobutyric acid, acetic acid, propionic acid esters and citric acid; esters based on nitrocellulose and polyvinyl acetate; fatty acid esters; dicarboxylic acid esters; esters of OH-group-carrying or epoxidized fatty acids; glycolic acid esters; benzoic acid esters; phosphoric acid esters; sulfonic acid esters; trimellitic acid esters; polyether plasticizers, such as end-capped polyethylene or polypropylene glycols; polystyrene; hydrocarbon plasticizers; chlorinated paraffin; and, mixtures thereof.

Exemplary commercially available plasticiser for use in the present disclosure include but are not limited to: Lupranol 1000/1, available from BASF; Caradol ED 56-300 available from Shell; Arcol PPG 2000 available from Covestro; Voranol 2000 L available from DOW; and, Jeffol PPG 2000 available from Huntsman.

*"Stabilizers"* for purposes of this disclosure are to be understood as antioxidants, UV stabilizers or hydrolysis stabilizers. Herein stabilizers may constitute *in toto* from 0 to 10 wt.%, for example from 0 to 5 wt.%, based on the total weight of the composition. Standard commercial examples of stabilizers suitable for use herein include: sterically hindered phenols; thioethers; benzotriazoles; benzophenones; benzoates; cyanoacrylates; acrylates; amines of the hindered amine light stabilizer (HALS) type; phosphorus; sulfur; and, mixtures thereof.

The curable, liquid-state composition of the present disclosure may, in certain embodiments, comprise a thermally conductive filler. For example, the composition may comprise from 0 to 20 wt.%, for example from 0 to 15 wt.% or from 0 to 10 wt.% of thermally conductive filler, based on the weight of the composition.

Broadly, there is no particular intention to limit the shape of the particles employed as thermally conductive fillers: particles that are acicular, spherical, ellipsoidal, cylindrical, bead-like, cubic or platelet-like may be used alone or in combination. Moreover, it is envisaged that agglomerates of particles, including agglomerates of more than one particle type, may be used. It is preferred however that the particles of thermally conductive filler have an aspect ratio of less than 5, such as less than 2, less than 1.5 or less than 1.3. The use of ellipsoidal or spherical particles, for instance, can serve to obviate the composition having an undesirably high viscosity as the conventional loading of the filler.

Equally, there is no particular intention to limit the size of the particles employed as thermally conductive fillers. However, the thermally conductive filler should in toto possess an mean volume particle size (Dv50), as measured by laser diffraction, of from 0.1 to 500 µm, for example from 0.5 to 200 µm or from 0.5 to 100 µm. Independently of or additional to this overall mean particle size, the thermally conductive filler may have a polymodal particle size distribution which may be the consequence of combining two or more particulates (P1, P2) which are characterized by different mean volume particle sizes (Dv50^{P1}, Dv50^{P2}).

Exemplary thermally conductive fillers include metallic filler, inorganic filler, carbon-based filler, thermally conductive polymer particle filler and combinations thereof.

Metallic fillers include metallic particles and particles of metals which possess non-metallic layers on the surfaces thereof the particles. Such non-metallic layers include, but are not limited to metal nitride layers or metal oxide layers. Suitable metallic fillers are exemplified by particles of metals selected from aluminum, copper, gold, nickel, silver and combinations thereof. Suitable metallic fillers are further exemplified by particles of the metals listed above having layers on their surfaces chosen from aluminum nitride, aluminum oxide, copper oxide, nickel oxide, silver oxide and combinations thereof. In an illustrative example, the metallic filler may comprise aluminum particles which having aluminum oxide layers on their surfaces.

Illustrative inorganic fillers, which may be used alone or in combination, include: metal oxides, such as aluminum oxide, beryllium oxide, magnesium oxide and zinc oxide; nitrides, such as aluminum nitride and boron nitride; and, carbides, such as silicon carbide and tungsten carbide. Further examples include aluminum trihydrate, silicone dioxide, barium titanate and magnesium hydroxide.

Carbon-based fillers can include carbon black, carbon nanotubes, carbon nanostuctures, non-graphitic carbon fibers, diamond, and graphite. The term graphite is intended to encompass herein natural and synthetic crystalline graphites, expanded graphites, graphitic carbons and graphitic carbon fibers. The use of carbon black and / or expanded graphite may be mentioned in particular.

The term *"carbon nanotube"* as used herein refers to carbon fullerene, a synthetic graphite, which typically has a molecular weight of greater than 840 g/mole. The term is intended to encompass roped carbon nanotubes, single-walled carbon nanotubes (SWCNT) and multiple walled carbon nanotubes (MWCNT). Single walled carbon nanotubes - having a wall consisting of only one graphene layer - typically have diameters of from 1 to 5 nm; multi-walled carbon nanotubes typically have diameters of from 5 to 200 nm. It is further envisaged that carbon nanotubes having utility herein may be opened or chopped, for which US Patent No. 7,641,829 B2 provides an instructive reference. And still further, the present disclosure does not preclude the use of carbon nanotubes which have been chemically modified through, for example, doping with thionyl chloride (SOCl2).

The term *"carbon nanostructure"* or "CNS" refers herein to a plurality of carbon nanotubes (CNTs) that can exist as a polymeric structure through, in particular, sharing common walls with one another and / or through being one or more of: interdigitated; branched; entangled; or, crosslinked. Thus, carbon nanostructures can be considered to have carbon nanotubes as a base monomer unit of their polymeric structure. In many cases, the constituent carbon nanotubes will be multiple walled carbon nanotubes (MWCNT).

Examples of thermally conductive polymer fillers include oriented polyethylene fibers and nanocellulose. Other examples of polymers that could be used to make thermally conductive fillers include polythiophene and liquid crystalline polymers based on polyesters or epoxies.

In certain embodiments, the one component (1K) composition comprises electrically insulating, thermally conductive fillers. In other embodiments, the thermally conductive filler of the composition comprises at least one particulate chosen from aluminum oxide, aluminum nitride, boron nitride, magnesium oxide, zinc oxide, expanded graphite and mixtures thereof.

The above described thermally conductive fillers may, in certain embodiments, have been pretreated with a surface treatment agent prior to inclusion in the composition. Conventionally, the surface treatment agent will comprise from 0.1 to 5 wt.%, for example from 0.1 to 2 wt.% based on the total weight of the thermally conductive filler.

Exemplary surface treatment agents, which may be used alone or in combination, include but are not limited to: fatty acids; silanes, in particular alkoxysilanes such as hexyltrimethoxysilane, octyltriethoxysilane, decyltrimethoxysilane, dodecyltrimethoxysilane, tetradecyltrimethoxysilane, phenyltrimethoxysilane, phenylethyltrimethoxysilane, octadecyltrimethoxysilane and, octadecyltriethoxysilane; alkoxy-functionalized oligosiloxane; cyclic polyorganosiloxane; hydroxyl-functionalized oligosiloxanes; organochlorosilanes, such as methyltrichlorosilane, dimethyldichlorosilane and trimethyl monochlorosilane; organosilazanes such as hexamethyldisilazane and hexamethylcyclotrisilazane; and organoalkoxysilanes such as methyltrimethoxysilane, vinyltrimethoxysilane, vinyltriethoxysilane, 3-glycidoxypropyltrimethoxysilane and 3-methacryloxypropyltrimethoxysilane.

Whilst the composition of the present disclosure may, in certain embodiments, comprise a thermally conductive filler, this does not preclude the presence in the composition of further fillers. Such fillers may serve as *inter alia* reinforcing fillers, extending fillers, magnetic fillers, electrically conductive fillers or as absorbers of electromagnetic radiation. Whilst such further fillers should not typically comprise more than 10 wt.% of the weight of the composition, the desired viscosity and elected method of application of the curable composition will typically be determinative of the total amount of further filler which may be added. For example, compositions which are intended to be extrudable from a suitable dispensing apparatus, such as a tube, should possess a viscosity of from 1000 to 150,000, preferably from 10,000 to 100,000 mPas.

Exemplary further inorganic fillers include for example, chalk, lime powder, precipitated and/or pyrogenic silicic acid, zeolites, bentonites, magnesium carbonate, diatomite, clay, talc, titanium oxide, iron oxide, sand, quartz, flint, mica, glass powder, and other ground mineral substances. Organic fillers can also be used, in particular wood fibers, wood flour, sawdust, cellulose, cotton, pulp, cotton, wood chips, chopped straw, chaff, ground walnut shells, and other chopped fibers. Short fibers such as glass fibers, glass filament, polyacrylonitrile, Kevlar fibers, or polyethylene fibers can also be added.

The pyrogenic and/or precipitated silica may advantageously have a BET surface area from 10 to 90 m²/g: when they are used, such silicas do not cause any additional increase in the viscosity of the composition according to the present disclosure, but do contribute to strengthening the cured composition. It is likewise conceivable to use pyrogenic and/or precipitated silicic acids having a higher BET surface area, advantageously from 100 to 250 m²/g, in particular from 110 to 170 m²/g, as a filler: because of the greater BET surface area, the effect of strengthening the cured composition is achieved with a smaller proportion by weight of silica.

Fillers which impart thixotropy to the composition may have utility for many applications: such fillers are also described as rheological adjuvants and include, for example, hydrogenated castor oil, fatty acid amides or swellable plastics, such as PVC.

A need also occasionally exists to lower the viscosity of the composition according to the present disclosure for specific applications, by using non-reactive diluent(s). For instance, but for illustration only, the composition may contain one or more of: xylene; 2-methoxyethanol; dimethoxyethanol; 2-ethoxyethanol; 2-propoxyethanol; 2-isopropoxyethanol; 2-butoxyethanol; 2-phenoxyethanol; 2-benzyloxyethanol; benzyl alcohol; ethylene glycol; ethylene glycol dimethyl ether; ethylene glycol diethyl ether; ethylene glycol dibutyl ether; ethylene glycol diphenyl ether; diethylene glycol; diethylene glycol-monomethyl ether; diethylene glycol-monoethyl ether; diethylene glycol-mono-n-butyl ether; diethylene glycol dimethyl ether; diethylene glycol diethyl ether; diethylene glycoldi-n-butylyl ether; propylene glycol butyl ether; propylene glycol phenyl ether; dipropylene glycol; dipropylene glycol monomethyl ether; dipropylene glycol dimethyl ether; dipropylene glycoldi-n-butyl ether; N-methylpyrrolidone; diphenylmethane; diisopropylnaphthalene; petroleum fractions such as Solvesso^{®} products (available from Exxon); alkylphenols, such as tert-butylphenol, nonylphenol, dodecylphenol and 8,11,14-pentadecatrienylphenol; styrenated phenol; bisphenols; aromatic hydrocarbon resins especially those containing phenol groups, such as ethoxylated or propoxylated phenols; adipates; sebacates; phthalates; benzoates; organic phosphoric or sulfonic acid esters; and sulfonamides.

The above aside, it is preferred that said non-reactive diluents constitute less than 10 wt.%, in particular less than 5 wt.% or less than 2 wt.%, based on the total weight of the composition.

The following examples are illustrative of the present invention and are not intended to limit the scope of the invention in any way.

### EXAMPLES

The following materials are employed in the Examples:

| | |
|---|---|
| DER 331: | Epoxy resin, based on Bisphenol-A and epichlorohydrin, available from Olin. |
| Heloxy Modifier 505: | Polyepoxide resin (*epoxy equivalent weight 500-650 g*/*eq.*), available from Westlake Epoxy |
| Cardolite NC513: | Reactive epoxy diluent, available from Cardolite |
| Dyhard 100SH | Latent hardener, available from Alzchem Group |
| Curezol 2MZ: | Encapsulated imidazole accelerator, available from Evonik Industries |
| Luzenac 2: | Talc filler, available from Imerys |
| Carbon Black: | Filler, available from Orion Engineered Carbons LLC |
| Expancel 920DU40: | Expandible microspheres, available from Nouryon |
| Teroson EP5065: | Two-component (2K) epoxy fixative, available from Loctite |
| Teroson MS 939: | Modified silane fixative, available from Loctite |
| Teroson PU 6700: | Two-component (2K) polyurethane fixative, available from Loctite |
| Bonderite M-NT 1455 W: | Wipes comprising a chromium-free, dry-in-place metal pretreatment agent, available from Henkel |

The remaining compounds of the Examples may be obtained from Sigma Aldrich.

The constituents listed in Table 1 below were combined and admixed using a Flacktec speed mixer to form a homogenous mixture. For completeness, the given percentages by weight (wt.%) of Table 1 are based on the composition *in toto.*

**Table 1**

| Constituent | Composition Example 1 (wt.%) | Composition Example 2 (wt.%) | Composition Example 3 (wt.%) |
|---|---|---|---|
| DER 331 | 46.00 | 46.00 | 40.02 |
| Heloxy Modifier 505 | 15.00 | 15.00 | 13.05 |
| Cardolite NC513 | 0.00 | 0.00 | 8.70 |
| Dyhard 100SH | 3.52 | 3.52 | 3.30 |
| Curezol 2MZ | 1.52 | 10.00 | 10.44 |
| Luzenac 2 | 0.00 | 3.00 | 2.61 |
| Carbon black | 0.14 | 0.14 | 0.12 |
| Expancel 920DU40 | 21.75 | 22.34 | 34.38 |

The following procedures and tests were used to evaluate the tabulated compositions:
Lap Shear Strength Testing: The application substrates were: aluminium (*Al5005, available from Rocholl Aluminium Legierung*) of which the specimens have the dimensions of 100 mm x 25 mm x 2.0 mm; E-coated Steel (*available from Rocholl KTL Stahlprütkörper*) of which the specimens have the dimensions 100 mm x 25 mm x 1.8mm; and, e-coated aluminium (*EC3000, available from Axalta*) of which the specimens have the dimensions 12.50 mm x 25 mm x 1.0mm.

For each substrate type, half of the provided specimens were first rubbed with a piece of paper soaked with isopropanol and then permitted to dry; the designated half of the AI5005 substrate specimens were then subjected to an additional wiping step using Bonderite M-NT 1455 W wipes. The specimens were then bar-coated with the exemplified one-component (1K) adhesive compositions (Table 1) to an approximate wet thickness of 200 microns. Each applied one-component (1K) adhesive composition was cured in the overlapping region under one of two conditions: 24 hours at 105°C for compositions of Example 1; 80 minutes at 106°C for compositions of Examples 2 and 3. These curing conditions did not thermally actuate the constituent thermoplastic microspheres (*Expancel 920DU40*).

After curing and measuring the applied adhesive layer thickness, rubber spacers of 1.6 mm were set on the top of the applied layer with a distance of 10 mm between each spacer. This is necessary to provide a bondline of the same thickness. The above-mentioned fixative compositions (*PU, Epoxy or modified-silane*) were then independently applied in between the rubber spacer with a total bondline area of 2.5 cm x 1 cm using a manual cartridge pusher through a static mixer.

Further substrate specimens - which had not been coated and cleaned as described above - were mounted and faced with the coated specimens to interpose the exemplified adhesives, spacer and fixative therebetween. The so-formed bonded structure was wiped to removing excess fixative and then clamped. The bonded structures were then treated to cure the constituent fixatives in accordance with the technical data sheets thereof; the structures were then stored at room temperature for 24 hours prior to initial tensile testing.

Tensile lap shear (TLS) test were performed at room temperature based upon ASTM D3163-01 *Standard Test Method for Determining Strength of Adhesively Bonded Rigid Plastic Lap-Shear Joints in Shear by Tension Loading.* For each bonded structure, tensile lap shear strength was investigated based on: at least one temperature condition lower than the activation temperature of the constituent expandible microspheres (23°C, 60°C); and, a temperature of 23°C attained following the application of a temperature condition above the activation temperature of the constituent expandible microspheres. Where applicable, heat was applied to the bonded structures using an EasyHeat 2.4 kW induction heating device available from Ambrell. Specifically, the microsphere thermal activation condition comprised induction heating at 40% device power, wherein the induction heater was disposed at a distance of 0.5 cm from the bonded structure for a duration of 20 seconds; the debondable adhesive layer (12) reached a temperature of 160°C.

The results of the tests are documented in Table 2 below. The tabulated values represent the mean lap shear strength based on measurements for at least 3 bonded structures provided for each combination of substrate, adhesive and fixative.

**Table 2**

| Test | First Substrate of Bonded Structure | Second Substrate of Bonded Structure | Adhesive | Fixative | Lap Shear at 23°C (MPa) | Lap Shear at 60°C (MPa) | Lap Shear at 23°C after activation (MPa) |
|---|---|---|---|---|---|---|---|
| 1 | AI5005 | AI5005 | Composition Example 1 | Teroson EP5065 | 10.1 | 9.8 | 2.3 |
| 2 | AI5005 | AI5005 | Composition Example 2 | Teroson EP5065 | 9.3 | 9.2 | 2.6 |
| 3 | AI5005 | AI5005 | Composition Example 3 | Teroson EP5065 | 8.9 | 6.6 | 0.0 |
| 4 | AI5005 | AI5005 | Composition Example 3 | Teroson MS939 | 2.2 | | 0.0 |
| 5 | AI5005 | AI5005 | Composition Example 3 | Teroson PU6700 | 7.7 | 4.5 | 0.0 |
| 6 | E-coated Steel | E-coated Steel | Composition Example 3 | Teroson EP5065 | 9.1 | 6.6 | 0.0 |
| 7 | E-coated Aluminium | AI5005 | Composition Example 3 | Teroson EP5065 | 6.3 | 6.3 | 0.0 |

Each bonded structure may be effectively debonded by the activation of the expandible microspheres of the adhesive compositions. It is evident that the presence of the reactive diluent in the adhesive composition of Example 3 improves debonding efficiency without significantly compromising initial tensile strength.

Although some preferred embodiments have been described, any modifications and variations may be made thereto in light of the above teachings. It is therefore to be understood that the invention may be practiced otherwise than as specifically described without departing from the scope of the appended claims.

## Claims

1. An one component (1K) composition comprising:
a) thermally-expandable thermoplastic microspheres;
b) at least one epoxide compound;
c) at least one compound which provides at least two amine hydrogens reactive toward epoxide groups; and,
d) at least one accelerator;
wherein the composition is **characterized by** a molar ratio of epoxide-reactive groups to epoxide groups from 0.6:1 to 1.2:1, preferably from 0.95: 1 to 1.1:1.

2. The one component (1K) composition according to claim 1 comprising, based on the weight of the composition:
from 10 to 40 wt.% of a) said thermally-expandable thermoplastic microspheres;
from 30 to 70 wt.% of b) said at least one epoxide compound;
from 0.01 to 25 wt.% of c) said at least one compound which provides at least two amine hydrogens reactive toward epoxide groups; and,
from 0.01 to 5 wt.% of d) said at least one accelerator,
wherein the composition is **characterized by** a molar ratio of epoxide-reactive groups to epoxide groups from 0.6:1 to 1.2: 1, preferably from 0.95: 1 to 1.1: 1.

3. The one component (1K) composition according to claim 1 or claim 2, wherein said thermally expandable thermoplastic microspheres have a core-shell structure, wherein the shell is formed from cross-linked polymer and the core is composed of a blowing agent.

4. The one component (1K) composition according to any one of claims 1 to 3, wherein said thermally expandable thermoplastic microspheres expand when exposed to a temperature of from 100 to 200°C, preferably from 100 to 170°C, more preferably from 100 to 140°C.

5. The one component (1K) composition according to any one of claims 1 to 4, wherein said thermally expandable thermoplastic microspheres have a mean volume particle size (Dv50), as measured by laser diffraction, of from 5 to 100 µm, preferably from 5 to 75 µm, more preferably from 5 to 50 µm and most preferably from 10 to 30 µm.

6. The one component (1K) composition according to any one of claims 1 to 5, wherein constituent b) of the one component (1K) composition comprises:
b)i) at least one liquid polyglycidyl ether of a polyhydric phenol, said polyglycidyl ether being **characterized by** a viscosity of from 100 to 5000 mPa.s, as determined at 25°C and 50% Relative Humidity; and,
b)ii) at least one liquid epoxide compound which acts as a diluent for said constituent b)i) and which has from 1 to 6 epoxide groups per molecule.

7. The one component (1K) composition according to claim 6, wherein the or each liquid polyglycidyl ether of constituent b)i) has an epoxide equivalent weight of from 100 to 700 g/eq, preferably from 100 to 320 g/eq.

8. The one component (1K) composition according to any one of claims 1 to 7, wherein constituent c) comprises dicyandiamide, wherein said dicyandiamide is preferably **characterized by** a mean volume particle size (Dv50) of from 0.5 to 100 µm.

9. The one component (1K) composition according to any one of claims 1 to 8, wherein constituent d) comprises an encapsulated imidazole compound, wherein said encapsulated imidazole is preferably **characterized by** a mean volume particle size (Dv50) of from 1 to 50 microns.

10. A bonded structure comprising:
a first substrate (S¹);
a second substrate (S²); and,
a fixative layer which is interposed between said first and second substrates and which is disposed on said second substrate (S²);
wherein, interposed between said first substrate (S¹) and said fixative layer, there is further provided:
a thermally debondable adhesive layer, said thermally debondable adhesive layer being obtained by the curing of an one-component (1K) composition as defined in any one of claims 1 to 9.

11. The bonded structure according to claim 10, wherein said fixative layer is disposed on and in direct contact with said second substrate (S²).

12. The bonded structure according to claim 10 or claim 11, wherein said thermally debondable adhesive layer is disposed on and in direct contact with said fixative layer.

13. The bonded structure according to any one of claims 10 to 12, wherein said thermally debondable adhesive layer is in direct contact with both of said first substrate (S¹) and said fixative layer.

14. The bonded structure according to any one of claims 10 to 13, wherein at least one spacer is disposed within said fixative layer, said at least one spacer contacting said thermally debondable adhesive layer.

15. The bonded structure according to any one of claims 10 to 14, wherein:
i) said fixative layer has a thickness of from 250 to 2500 µm, preferably from 500 to 2000 µm and more preferably from 1000 to 2000 µm; and,
ii) said thermally debondable adhesive layer has a thickness of from 50 to 300 µm, preferably from 100 to 300 µm and more preferably from 150 to 250 µm.

16. A method of debonding the bonded structure as defined in any one of claims 10 to 15, said method comprising the steps of:
i) heating the thermally debondable adhesive layer to cause the expansion of at least a fraction of the thermally-expandable thermoplastic microspheres; and,
ii) causing cohesive failure of said adhesive layer.

17. The method according to claim 16, wherein step i) comprises heating said thermally debondable adhesive layer to a temperature of from 90 to 200°C for a duration of from 0.1 to 60 minutes.
